# EUROPÄISCHE PATENTSCHRIFT

(11) **EP 2 989 668 B1**
(45) Veröffentlichungstag und Bekanntmachung des Hinweises auf die Patenterteilung: **06.06.2018**
(21) Anmeldenummer: 13718330.7
(22) Anmeldetag: 24.04.2013
(51) Int. Cl.: H01M 2/10, A47L 11/40, H01M 2/30, H01M 10/04

(54) **BATTERIEVORRICHTUNG UND MASCHINE**
BATTERY DEVICE AND MACHINE
DISPOSITIF À BATTERIE ET MACHINE

(43) Veröffentlichungstag der Anmeldung: 02.03.2016
(73) Patentinhaber: Alfred Kärcher GmbH & Co. KG, 71364 Winnenden (DE)
(72) Erfinder: SCHÜTZ, Michael, 70439 Stuttgart (DE); ORBAN, Attila, 71522 Backnang (DE); BURCHARD, Jochen, 73525 Schwäbisch Gmünd (DE); SCHOLL, Julien, 71336 Waiblingen (DE)
(74) Vertreter: Hoeger, Stellrecht & Partner Patentanwälte mbB
(86) Internationale Anmeldenummer: PCT/EP2013/058447
(87) Internationale Veröffentlichungsnummer: WO 2014/173440

(56) Entgegenhaltungen:
- EP-A1- 0 563 432
- EP-A1- 2 432 044
- EP-A1- 2 562 844
- DE-A1- 10 314 292
- DE-B- 1 232 226
- DE-U- 1 901 724
- JP-A- 2010 118 199
- US-A- 4 224 383
- US-A- 4 752 543
- US-A1- 2002 034 683
- US-A1- 2002 142 195
- US-A1- 2010 190 052

## Beschreibung

Die Erfindung betrifft eine Batterievorrichtung, umfassend mindestens eine Batterieeinheit mit einem Gehäuse, welches eine elektrochemische Einrichtung aufnimmt, wobei das Gehäuse einen Behälter und einen Deckel für den Behälter aufweist und an dem Gehäuse eine Ausnehmung angeordnet ist, deren Begrenzungswände gegenüber Außenseiten von Wänden des Gehäuses außerhalb der Ausnehmung zurückgesetzt sind und wobei an der Ausnehmung mindestens ein elektrischer Anschluss angeordnet ist, wobei der Deckel einen ersten Bereich aufweist, welcher im Wesentlichen eben ist und welcher von einem abgeschrägten Bereich umgeben ist.

Die Erfindung betrifft ferner eine Maschine, insbesondere eine Bodenreinigungsmaschine, welche eine Aufnahmeeinrichtung für eine Batterievorrichtung umfasst.

Aus der WO 2011/082830 A1 ist ein Bodenreinigungsgerät bekannt, welches mindestens eine wiederaufladbare Batterie zum Bereitstellen elektrischer Energie für ein Elektromotor umfasst sowie mindestens ein Halteteil zum Halten der mindestens einen wiederaufladbaren Batterie am Bodenreinigungsgerät.

Aus der JP 2008 28938 ist eine Batterie für ein Motorrad bekannt. Die Batterie umfasst einen Deckel.

Aus der US 2010/0190052 A1 ist ein Batteriepack bekannt, welcher ein Gehäuse mit einem ersten Ende und einem zweiten Ende aufweist. An dem ersten Ende des Gehäuses sind ein erster Anschluss, ein zweiter Anschluss und ein dritter Anschluss angeordnet. Das Gehäuse dient zur Verbindung mit einem Endprodukt. Es weist eine einzige Batteriezelle auf.

Der Erfindung liegt die Aufgabe zugrunde, eine Batterievorrichtung der eingangs genannten Art bereitzustellen, welche auf einfache Weise handhabbar ist.

Diese Aufgabe wird bei der eingangs genannten Batterievorrichtung erfindungsgemäß dadurch gelöst, dass an einem Boden des Behälters an einer Außenseite eine von einer Wandung umgebende Ausnehmung angeordnet ist, welche an die Form des Deckels angepasst ist, wobei die Ausnehmung als Zentrierungsausnehmung für einen Stapelverbund mit einer Mehrzahl von Batterieeinheiten ausgebildet ist, wobei Batterieeinheiten im Stapelverbund elektrisch miteinander verbunden sind.

Durch die Ausnehmung lässt sich der mindestens eine elektrische Anschluss in einer Art von Einbuchtung am Gehäuse positionieren. Dadurch lässt er sich zum einen geschützt anordnen. Zum anderen ist ein gewisser Freiraum bereitgestellt, welcher beispielsweise einen Stecker zum Anschließen an den Anschluss aufnehmen kann.

Es ergibt sich dadurch eine optimierte Anschlussbarkeit der Batterievorrichtung bezüglich Steuersignale beziehungsweise zur Leistungsauskopplung beziehungsweise Leistungseinkopplung.

Die Batterievorrichtung ist insbesondere wieder aufladbar.

Es lässt sich auf einfache Weise ein Stapelverbund mit einer Mehrzahl von Batterieeinheiten, welche relativ zueinander fixiert sind, ausbilden. Die elektrische Verbindung zwischen unterschiedlichen Batterieeinheiten eines Stapelverbunds lässt sich auf einfache Weise durch Verbindungskabel zwischen den elektrischen Anschlüssen von Batterieeinheiten herstellen.

Der Deckel weist einen ersten Bereich auf, welcher im Wesentlichen eben ist und welcher von einem abgeschrägten Bereich umgeben ist. Es lässt sich dadurch auf einfache Weise einen Stapelverbund herstellen. Beispielsweise können benachbarte Batterieeinheiten, welche grundsätzlich gleich ausgebildet sind, so auf einfache Weise zentriert werden.

In einem Boden des Behälters ist an einer Außenseite ein von einer Wandung umgebende Ausnehmung angeordnet, welche an die Form des Deckels angepasst ist, wobei die Ausnehmung als Zentrierungsausnehmung ausgebildet ist. Es lassen sich dadurch gleich ausgebildete Batterieeinheiten auf einfache Weise stapeln und eine Stapelposition lässt sich auf einfache und schnelle Weise erreichen.

Günstig ist es, wenn die Ausnehmung an einem Eckbereich des Gehäuses angeordnet ist. Dadurch ergibt sich eine leichte Zugänglichkeit. Es kann beispielsweise bei montierter Batterieeinheit beziehungsweise beim montierten Stapelverbund auf einfache Weise eine Kabelverbindung über den mindestens einen elektrischen Anschluss hergestellt werden. Außerdem wird dann durch den mindestens einen elektrischen Anschluss beispielsweise eine Verspannung von Batterieeinheiten zur Bildung eines Stapelverbunds nicht gestört.

Günstig ist es, wenn die Ausnehmung in einer ersten Richtung, in einer zweiten Richtung und in einer dritten Richtung offen ist, wobei die erste Richtung, die zweite Richtung und die dritte Richtung linear unabhängige Richtungen sind und insbesondere jeweils senkrecht zueinander orientiert sind. Dadurch ergibt sich eine leichte Zugänglichkeit an der Ausnehmung und insbesondere ein Steckeranschluss an dem mindestens einen elektrischen Anschluss herzustellen.

Aus dem gleichen Grund ist es günstig, wenn die Ausnehmung eine erste Begrenzungswand, eine zweite Begrenzungswand und eine dritte Begrenzungswand aufweist, welche jeweils zueinander quer und insbesondere senkrecht orientiert sind.

Es ist dann ferner günstig, wenn die erste Begrenzungswand und/oder die zweite Begrenzungswand und/oder die dritte Begrenzungswand parallel zu mindestens einem Teilbereich einer entsprechenden Außenseite des Gehäuses orientiert sind.

Insbesondere ist der mindestens eine elektrische Anschluss an einer Begrenzungswand angeordnet, welche quer zu einer Deckeloberfläche orientiert ist. Dadurch ergibt sich eine einfache Zugänglichkeit insbesondere von einer Oberseite der Batterieeinheit beziehungsweise eines Stapelverbunds her.

Die Ausnehmung ist vorteilhafterweise als Einbuchtung am Gehäuse ausgebildet. Es ergibt sich dadurch ein einfacher Zugriff.

Bei einem Ausführungsbeispiel ist die Ausnehmung an dem Deckel angeordnet. Dadurch ergibt sich ein einfacher konstruktiver Aufbau. Beispielsweise ist es dann auch vorgesehen, dass eine elektrische Schaltungsanordnung, welche auf eine oder mehrere Platinen sitzt, in dem Deckel angeordnet ist. Dadurch lassen sich Verbindungskabel zwischen dem mindestens einem elektrischen Anschluss und der oder dem Platinen in ihrer Länge minimieren. Dadurch wiederrum ergibt sich eine optimierte Platznutzung.

Es kann vorgesehen sein, dass der mindestens eine elektrische Anschluss ein Steckeranschluss ist. Dadurch ergibt sich eine einfache Anschließbarkeit.

Es ist besonders vorteilhaft, wenn der mindestens eine elektrische Anschluss ein Steuersignalanschlussbereich und Leistungsanschlussbereich umfasst. Es lässt sich dadurch auf einfache Weise ein "kompletter" elektrischer Anschluss erreichen.

Günstig ist es, wenn der mindestens eine elektrische Anschluss mit mindestens einer im Gehäuse und insbesondere im Deckel angeordnete Platine elektrisch verbunden ist, und insbesondere das Verbindungsleitungen den gleichen Windungssinn aufweist. Es lässt sich dadurch eine platzsparende Verkabelung erreichen.

Insbesondere liegt der abgeschrägte Bereich in einem Winkel im Bereich zwischen 15° und 35° zu dem ersten Bereich. Dadurch ergibt sich ein fertigungstechnisch und konstruktiv einfacher Aufbau, und es lässt sich auf einfache Weise eine Zentrierung erreichen beziehungsweise eine Zentrierhilfe für die Herstellung eines Stapelverbunds bereitstellen.

Ganz besonders vorteilhaft ist es, wenn an dem Gehäuse der Ausnehmung mit mindestens einen elektrischen Anschluss gegenüberliegend eine weitere Ausnehmung angeordnet ist. Die weitere Ausnehmung ist insbesondere an den Behälter angeordnet. Bei einem Stapelverbund sind dann die Ausnehmung mit dem mindestens einen elektrischen Anschluss einer Batterieeinheit und die weitere Ausnehmung einer anderen Batterieeinheit aufeinander ausgerichtet. Es ergibt sich dann ein erhöhter Freiraum. Dadurch wiederum ist die Zugänglichkeit zu dem mindestens einen elektrischen Anschluss für einen Bediener vereinfacht beziehungsweise es ist ein vergrößerter Platz beispielsweise zur Aufnahme eines Steckers bereitgestellt.

Es ist dann günstig, wenn die weitere Ausnehmung so ausgebildet ist, dass, wenn eine erste Batterieeinheit mit einer zweiten Batterieeinheit verbunden ist, sich ein Freiraum, welcher durch die Ausnehmung mit dem mindestens einen elektrischen Anschluss an der ersten Batterieeinheit gebildet ist, sich in einem Freiraum fortsetzt, welcher durch die weitere Ausnehmung an der zweiten Batterieeinheit gebildet ist. Dadurch wird ein weiterer Platz bereitgestellt.

Ganz besonders vorteilhaft ist es, wenn mindestens ein an dem Gehäuse angeordneter Angriffsbereich für ein Verbindungselement zur Verbindung mehrere Batterieeinheiten miteinander vorgesehen ist. Dadurch lässt sich auf einfache Weise ein Stapelverbund herstellen. Insbesondere lässt sich auf einfache Weise eine Verbindung über Verspannung erreichen. Es lässt sich dadurch eine Batterievorrichtung mit modularem Aufbau und insbesondere modularer Leistung, die durch die Anzahl der Batterieeinheiten bestimmt ist, realisieren. Es lassen sich benachbarte Batterieeinheiten mit ihren Gehäusen verspannen, sodass die Anzahl unterschiedlichen Arten von Verbindungselementen gering halten.

Günstig ist es, wenn ein Angriffsbereich eine Leiste umfasst, an welcher ein Anlagelement eines Verbindungselements anlegbar ist und welche insbesondere hintergreifbar ist. Dadurch lässt sich auf konstruktiv einfache Weise eine Verbindung erreichen. Eine Leiste kann grundsätzlich auch als Sperrelement verwendet werden, um beispielsweise auf eine Fixierung an einer Aufnahmeeinrichtung einer Anwendung zu sorgen oder eine solche Fixierung zu verbessern.

Günstig ist es, wenn die mindestens eine Leiste an einer Ausnehmung am Gehäuse angeordnet ist. Die Ausnehmung kann auch dazu dienen, einen Teil des Verbindungselements aufzunehmen. Es lässt sich dadurch ein bezüglich seiner Außenabmessungen kompakter Stapelverbund realisieren.

Insbesondere sind an dem Gehäuse Angriffsbereiche mit entgegengesetzter Kraftwirkungsrichtung für Verbindungselemente angeordnet. Beispielsweise sind Angriffsbereiche an Deckel und Behälter angeordnet. Es lässt sich dadurch auf einfache Weise eine Verspannung erreichen, wobei insbesondere eine Verspannung nur mit der benachbarten Batterieeinheit möglich ist, um eine Modularität bereitzustellen.

Günstig ist es, wenn an dem Deckel und/oder an dem Behälter gegenüberliegenden Seiten Angriffsbereiche angeordnet sind. Dadurch lässt sich auf gegenüberliegenden Seiten eine Verspannung erreichen. Dadurch wiederum lässt sich auf einfache Weise ein Stapelverbund mit sicherer Fixierung erreichen.

Insbesondere sind Angriffsbereiche fluchtend aufeinander ausgerichtet. Dadurch lässt sich auf einfache und platzsparende Weise ein Stapelverbund realisieren.

Ganz besonders vorteilhaft ist es, wenn das mindestens eine Verbindungselement eine Klammer ist und gegenüberliegende Anlagelemente aufweist, durch welche mehrere Batterieeinheiten miteinander verspannbar sind. Ein Anlagelement kann insbesondere eine Leiste hintergreifen. Eine solche Klammer ist insbesondere einstückig aus einem Kunststoff-Material gefertigt.

Bei einem Ausführungsbeispiel ist das mindestens eine Verbindungselemente bandförmig ausgebildet. Es lassen sich dadurch auf einfache Weise mehrere (mindestens zwei) Verbindungselemente nebeneinander anordnen.

Bei einem weiteren Ausführungsbeispiel weist das mindestens eine Verbindungselement einen ersten Fuß, einen zweiten Fuß und einen Hals auf, wobei der erste Fuß und der zweite Fuß am Hals sitzen und zwischen dem ersten Fuß und dem zweiten Fuß ein Zwischenraum liegt, welcher insbesondere so ausgebildet ist, dass in diesem mindestens teilweise ein Hals eines weiteren Verbindungselements positionierbar ist. Ein solches Verbindungselement hat die Form eines großen Ypsilon. Es lässt sich ein Überlapp von mehreren Verbindungselementen erreichen. Dadurch lässt sich auf einfache Weise ein Stapelverbund realisieren.

Insbesondere sind an dem ersten Fuß, an dem zweiten Fuß und dem Hals jeweils Anlagelemente angeordnet, um so auf einfache Weise einen Stapelverbund realisieren zu können.

Bei einem Ausführungsbeispiel ist ein Angriffsbereich neben der Ausnehmung mit dem mindestens einen elektrischen Anschluss angeordnet. Es ergibt sich dadurch eine optimierte Platznutzung.

Es kann ferner eine Endplatte zur Anlage an eine Batterieeinheit vorgesehen sein, welche mindestens einen Angriffsbereich für ein Verbindungselement umfasst und/oder in welchem mindestens ein Verbindungselement angeordnet ist. Es lässt sich dadurch eine sichere Verspannung erreichen, um einen Stapelverbund zu bilden. Die Endplatte kann ein Element sein, mit welchem sich ein Stapelverbund außerhalb einer Anwendung bilden lässt, wobei dann der so gebildete Stapelverbund an der Anwendung fixiert wird. Die Endplatte kann auch ein Teil einer Anwendung sein und insbesondere kann sie ein funktionelles Element oder Teil eines funktionellen Elements der Anwendung wie einer Bodenreinigungsmaschine sein. Insbesondere lässt sich dadurch ein Stapelverbund bei der Fixierung an der Anwendung herstellen. Beispielsweise bildet die Endplatte mindestens in einem Teilbereich eine Wandung an der Bodenreinigungsmaschine aus oder bildet beispielsweise eine Stützeinrichtung für andere Elemente der Bodenreinigungsmaschine außerhalb der Batterievorrichtung aus.

Insbesondere weist die Endplatte mindestens eine Seitenleiste zur Anlage des Gehäuses einer Batterieeinheit auf. Dadurch wird eine einfache Positionierbarkeit mit Sperrung und Querbeweglichkeit erreicht. Eine Seitenleiste lässt sich auch dazu nutzen, um ein Verbindungselement wie beispielsweise eine Klammer zu fixieren.

Insbesondere ist die Batterievorrichtung als Stapelverbund mit einer Mehrzahl von Batterieeinheiten ausgebildet. Bei der erfindungsgemäßen Lösung lässt sich grundsätzlich eine beliebige Anzahl von Batterieeinheiten zu einem Stapelverbund hintereinander schalten. Es kann dann auf einfache Weise an den erforderlichen Leistungsbedarf angepasst werden.

Insbesondere ist in einem Stapelverbund ein Deckel einer Batterieeinheit an einem Boden des Behälters der benachbarten Batterieeinheit angelegt. Dadurch lässt sich auf einfache Weise eine Stapelung erreichen.

Es kann dabei vorgesehen sein, dass bei einem Stapelverbund Verbindungselemente mindestens in einem Teilbereich nebeneinander liegen. Dadurch ergibt sich ein einfacher konstruktiver Aufbau.

Es kann auch vorgesehen sein, dass in einem Stapelverbund Verbindungselemente mindestens in einem Teilbereich einander überlappen. Dadurch ergibt sich ein platzoptimierter Aufbau.

Erfindungsgemäß wird ferner eine Maschine und insbesondere eine Bodenreinigungsmaschine bereitgestellt, welche eine Aufnahmeeinrichtung und eine erfindungsgemäße Batterievorrichtung umfasst, in welcher die Batterievorrichtung positioniert ist.

Die Maschine kann dabei eine Batterieeinheit oder mehrere Batterieeinheiten oder ein Stapelverbund an Batterieeinheiten umfassen.

Insbesondere umfasst die Aufnahmeeinrichtung mindestens ein Element, welches in eine Ausnahme in die Batterieeinheit eintauchbar ist und an diese Ausnehmung angepasst ist, um insbesondere eine Kodierung bereitzustellen. Dadurch lässt sich sicherstellen, dass die Batterieeinheit oder ein entsprechender Stapelverbund richtig an der Aufnahmeeinrichtung positioniert wird, um Beschädigungen der Maschine zu vermeiden. Ferner lässt sich sicherstellen, dass die richtige Art von Batterieeinheit beziehungsweise Batterieeinheiten verwendet wird.

Insbesondere ist das mindestens eine Eintauchelement an eine Ausnehmung an einem Deckel eine Batterieeinheit angepasst ausgebildet.

Es ist ferner günstig, wenn die Aufnahmeeinrichtung mindestens ein Anlagelement zur Sperrung einer Beweglichkeit der Batterievorrichtung in der Aufnahmeeinrichtung und/oder zur Bildung einer Kodierung aufweist. Dadurch lässt sich zum einen eine sichere Fixierung der Batterievorrichtung an einer Wandung erreichen. Ferner lässt sich auch dadurch sicherstellen, dass die richtige Batterievorrichtung beziehungsweise in der richtigen Position an der Maschine eingesetzt wird. Alternativ oder zusätzlich lässt sich ein Anlagelement zur Bildung einer Kodierung verwenden, um sicherzustellen, dass nur eine geeignete Batterievorrichtung an der entsprechenden Maschine positioniert werden kann.

Bei einem Ausführungsbeispiel umfasst die Aufnahmeeinrichtung der Maschine eine Endplatte. Eine Endplatte kann verwendet werden, um einen Stapelverbund an einer Maschine zu bilden beziehungsweise auch um eine einzelne Batterieeinheit an der Maschine zu fixieren. Die Endplatte kann Teil der Aufnahmeeinrichtung und damit der Maschine sein und beispielsweise auch noch andere Funktionen an der Maschine erfüllen, wie beispielsweise die Ausbildung einer Wandung.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Darstellung eines Ausführungsbeispiels einer Batterieeinheit;
- Figur 2: eine Draufsicht auf die Batterieeinheit gemäß Figur 1;
- Figur 3: eine Seitenansicht der Batterieeinheit gemäß Figur 1;
- Figur 4: eine Schnittansicht längs der Linie 4-4 gemäß Figur 2 in einer Teildarstellung;
- Figur 5: eine Schnittansicht längs der Linie 5-5 gemäß Figur 3 in einer Teilansicht;
- Figur 6: eine perspektivische Darstellung eines ersten Ausführungsbeispiels eines Stapelverbunds mit Batterieeinheiten gemäß Figur 1;
- Figur 7: eine perspektivische Ansicht einer Endplatte für den Stapelverbund gemäß Figur 6;
- Figur 8: eine Ansicht von unten (in der Richtung A) des Stapelverbunds gemäß Figur 6;
- Figur 9: eine Draufsicht auf den Stapelverbund gemäß Figur 6;
- Figur 10: eine Schnittansicht längs der Linie 10-10 gemäß Figur 9;
- Figur 11: eine vergrößerte Darstellung des Bereichs B gemäß Figur 10;
- Figur 12: eine perspektivische Teildarstellung einer Bodenreinigungsmaschine, an welcher der Stapelverbund gemäß Figur 6 angeordnet ist;
- Figur 13: eine perspektivische Darstellung eines zweiten Ausführungsbeispiels eines Stapelverbunds mit Batterieeinheiten gemäß Figur 1;
- Figur 14: eine Endplatte für den Stapelverbund gemäß Figur 13;
- Figur 15: eine Draufsicht auf den Stapelverbund gemäß Figur 13;
- Figur 16: eine Unteransicht des Stapelverbunds gemäß Figur 13;
- Figur 17: eine Schnittansicht des Stapelverbunds gemäß Figur 13;
- Figur 18: eine vergrößerte Darstellung des Bereichs C gemäß Figur 17;
- Figur 19: eine perspektivische Teildarstellung einer Bodenreinigungsmaschine, an welcher der Stapelverbund gemäß Figur 13 angeordnet ist;
- Figur 20: ein Ausführungsbeispiel einer Aufnahmeeinrichtung an einer Maschine zur Aufnahme einer Batterieeinheit oder eines Stapelverbunds ohne Batterieeinheit;
- Figur 21: eine weitere Ansicht der Aufnahmeeinrichtung gemäß Figur 20;
- Figur 22: eine Schnittansicht längs der Linie 22-22 gemäß Figur 21;
- Figur 23: die gleiche Ansicht wie Figur 20 mit einer positionierten Batterieeinheit;
- Figur 24: die gleiche Ansicht wie Figur 21 mit positionierter Batterieeinheit; und
- Figur 25: eine Schnittansicht längs der Linie 25-25 gemäß Figur 24.

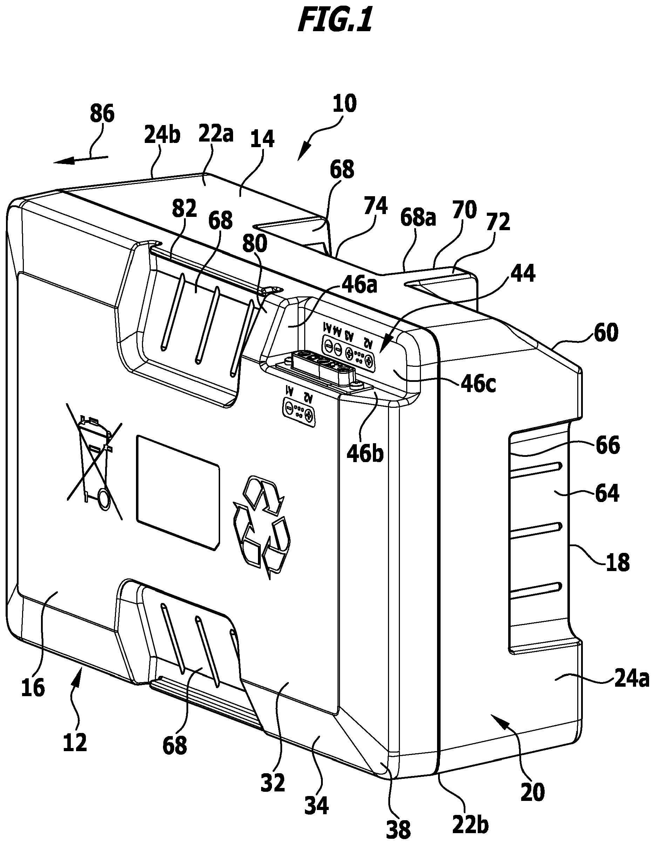

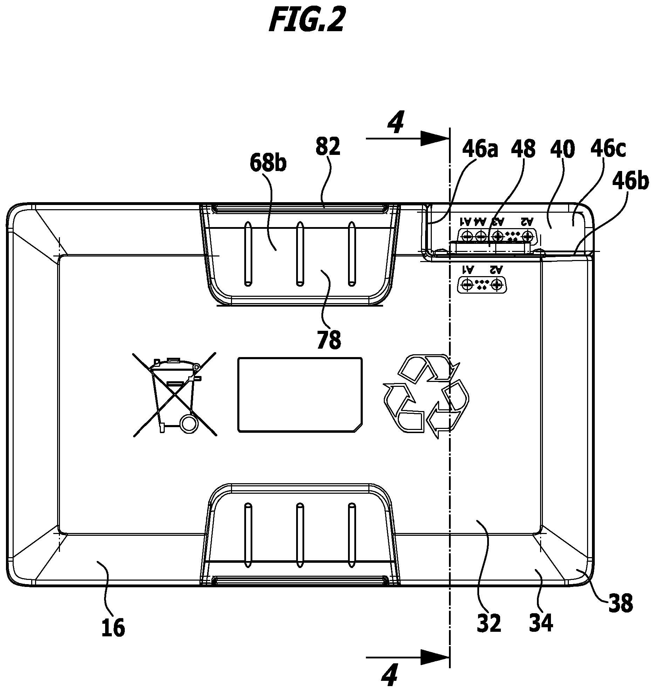

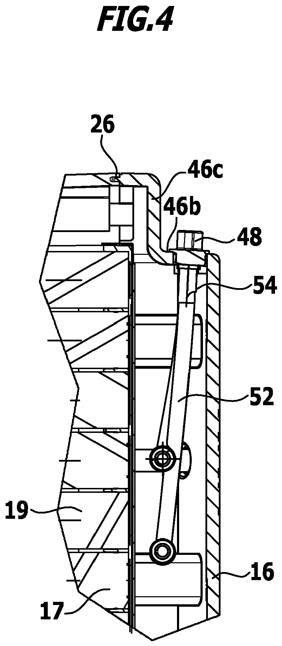

Ein Ausführungsbeispiel einer Batterievorrichtung umfasst eine Batterieeinheit, welche in den Figuren 1 bis 5 gezeigt und dort mit 10 bezeichnet ist. Die Batterieeinheit 10 hat ein Gehäuse 12 mit einem Behälter 14, an welchem ein Deckel 16 sitzt. In dem Gehäuse 12 ist ein Aufnahmeraum für eine elektrochemische Einrichtung 17 gebildet, in welchem die elektrochemische Einrichtung 17 sitzt. Die elektrochemische Einrichtung 17 umfasst beispielsweise eine oder mehrere wieder aufladbare Akkumulatorzellen 19.

Der Behälter 14 ist als Wanne ausgebildet mit einem Behälterboden 18, an welchem Wände 20 nach oben ragend angeordnet sind. Die Wände 20 umfassen eine erste Längswand 22a und eine beabstandet gegenüberliegende zweite Längswand 22b. Zwischen der ersten Längswand 22a und der zweiten Längswand 22b sitzen beabstandet gegenüberliegend eine erste Querwand 24a und eine zweite Querwand 24b. Bei einem Ausführungsbeispiel sind die Längswände 22a, 22b und die Querwände 24a, 24b quer und insbesondere senkrecht zu dem Behälterboden 18 orientiert. Die Längswände 22a, 22b sind quer und insbesondere mindestens näherungsweise senkrecht zu den Querwänden 24a, 24b orientiert. Die Längswände 22a und 22b sind mindestens näherungsweise parallel zueinander. (Es können beispielsweise Entformungsschrägen mit einer Winkelabweichung von ca. 1° bis 5° zur senkrechten beziehungsweise parallelen Ausrichtung vorhanden sein). Die Querwände 24a und 24b sind mindestens näherungsweise parallel zueinander.

Bei einem Ausführungsbeispiel sind die Wände 20 einstückig ausgebildet und sitzen insbesondere einstückig an dem Behälterboden 18.

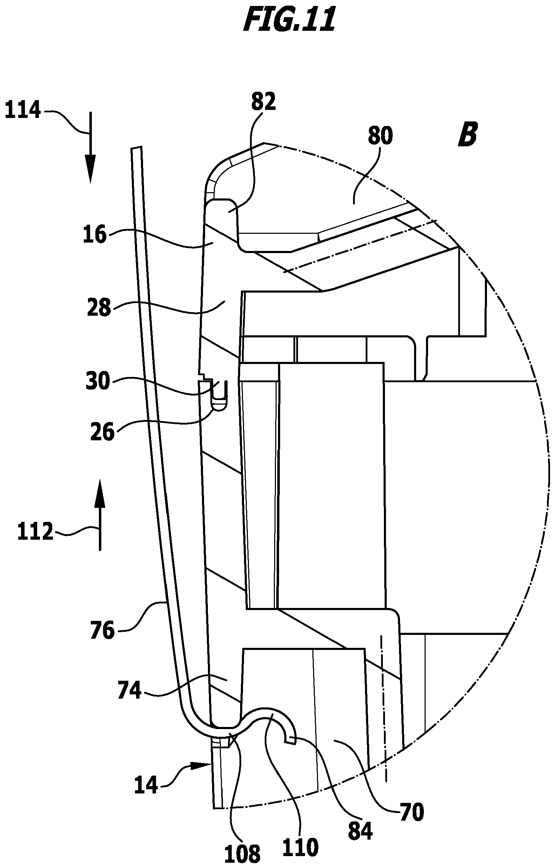

Bei einem Ausführungsbeispiel sind die Wände 20 mit einer (Stirn-)Nut 26 versehen (vergleiche Figur 11). Der Deckel 16 weist eine Wandung 28 auf, welche angepasst ist an die Wände 20. Die Wandung 28 ist mit einer Eintauchleiste 30 versehen, welche in die Nut 26 eingetaucht ist, wenn der Deckel 16 an den Behälter 14 fixiert ist.

Der Deckel 16 umfasst einen ersten Bereich 32. Dieser erste Bereich 32 ist mindestens näherungsweise eben ausgebildet. Der erste Bereich 32 ist von einem zweiten Bereich 34 umgeben, welcher abgeschrägt ausgebildet ist. Ein entsprechender Winkel 36 für die Abschrägung ist ein spitzer Winkel, welcher beispielsweise im Bereich zwischen 15° und 35° liegt. Insbesondere ist die Schrägfläche des zweiten Bereichs 34 außerhalb von Eckbereichen 38 eben.

Bei dem gezeigten Ausführungsbeispiel sind die Längswände 22a, 22b länger als die Querwände 24a, 24b. Es ist grundsätzlich auch möglich, dass Längswände und Querwände die gleichen Abmessungen aufweisen oder die Querwände länger sind als die Längswände. Der Behälter 14 ist mindestens näherungsweise beziehungsweise bezüglich Einhüllendenflächen quaderförmig.

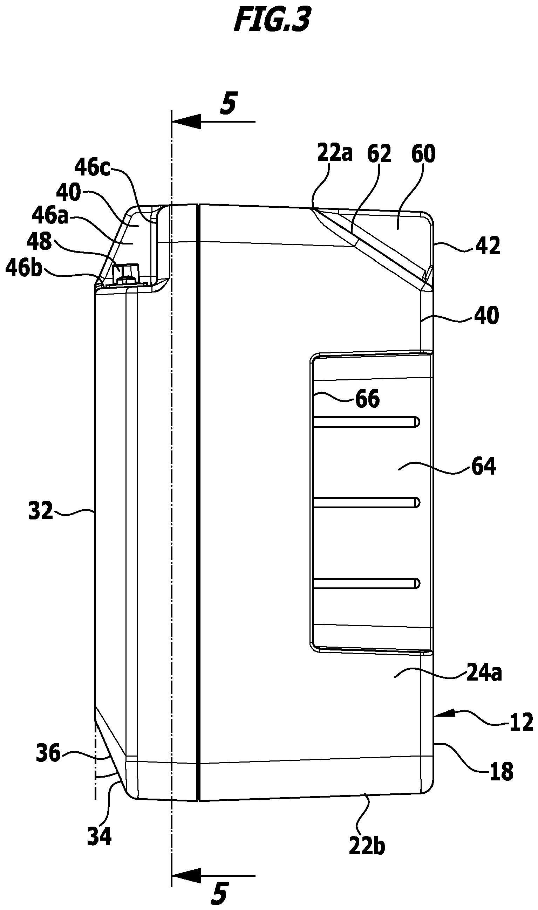

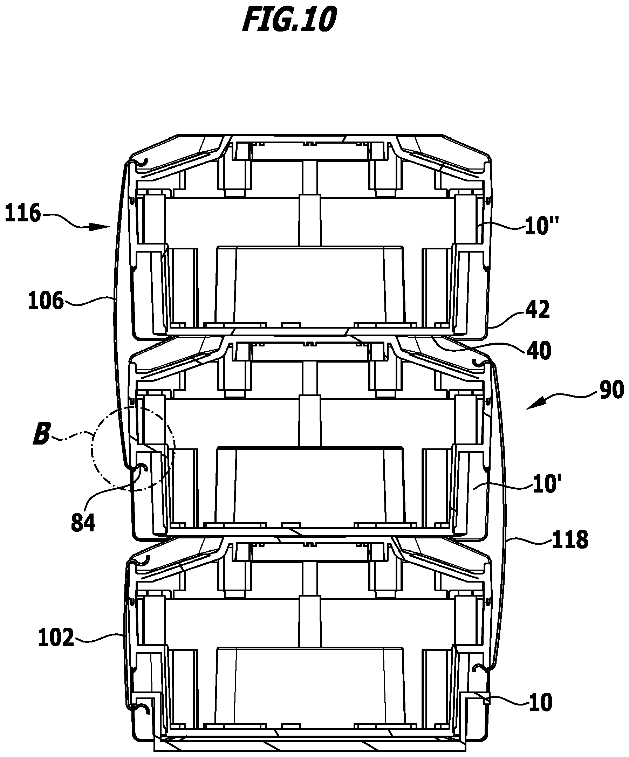

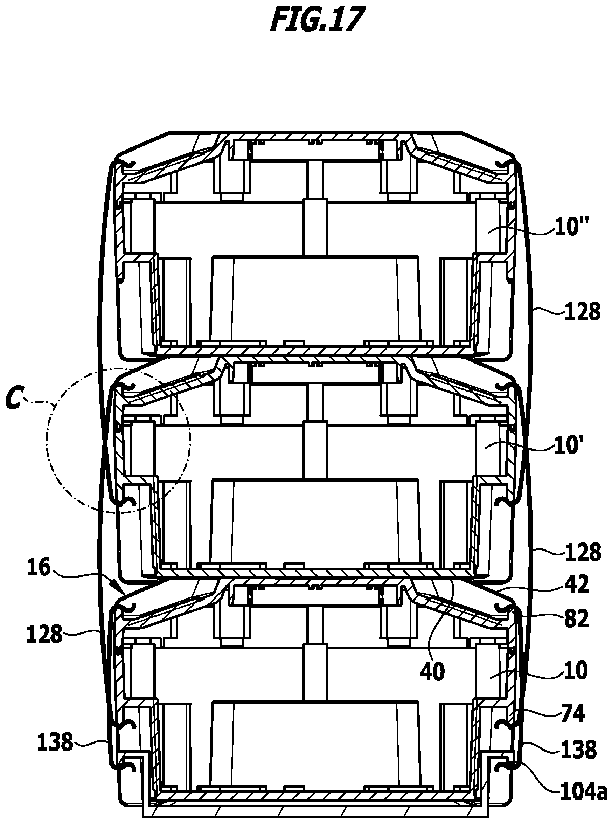

An dem Behälterboden 18 ist eine Ausnehmung 40 gebildet (vergleiche beispielsweise Figur 3), welche von einer Wandung 42 umgeben ist (siehe dazu auch Figur 10). Die Ausnehmung 40 und die Wandung 42 sind so ausgestaltet, dass der zweite Bereich 34 eines Deckels 16 einer weiteren Batterieeinheit, welche gleich ausgebildet ist wie die Batterieeinheit 10, an den Behälterboden 18 in der Ausnehmung 40 einlegbar ist. Der zweite Bereich 34 liegt dann an der Wandung 42 an (siehe Figur 17). Durch die schräge Ausbildung des zweiten Bereichs 34 ist eine Zentrierung erreicht beziehungsweise eine Zentrierhilfe gebildet, um so einen Stapelverbund einer Mehrzahl von Batterieeinheiten 10 auf einfache Weise bilden zu können.

An dem Deckel 16 ist in einem Eckbereich eine Ausnehmung 44 gebildet. Die Ausnehmung 44 ist begrenzt durch eine erste Begrenzungswand 46a, eine zweite Begrenzungswand 46b und eine dritte Begrenzungswand 46c. Die Begrenzungswände 46a, 46b, 46c sind alle an dem Deckel 16 gebildet und gegenüber einer Außenseite des Gehäuses 12 außerhalb der Ausnehmung 44 zurückgesetzt.

Bei einem Ausführungsbeispiel sind die Begrenzungswände 46a, 46b, 46c jeweils eben ausgebildet.

Die erste Begrenzungswand 46a liegt parallel zu der ersten Querwand 24a des Behälters 14. Die zweite Begrenzungswand 46b liegt parallel zu der ersten Längswand 22a des Behälters 14. Die dritte Begrenzungswand 46c liegt parallel zu dem ersten Bereich 32 des Deckels 16.

Die erste Begrenzungswand 46a liegt dabei an dem zweiten Bereich 34 des Deckels 16.

Durch die Ausnehmung 44 ist ein im Querschnitt trapezförmiger Ausschnitt an dem Deckel 16 gebildet. Die Ausnehmung 44 ist in drei linear unabhängigen Richtungen zu der Außenseite des Gehäuses 12 offen, nämlich in einer ersten Richtung senkrecht zur ersten Begrenzungswand 46a, in einer zweiten Richtung senkrecht zur zweiten Begrenzungswand 46b und in einer dritten Richtung senkrecht zur dritten Begrenzungswand 46c.

Der Deckel 16 schließt bündig mit den Wänden 20 des Behälters 14 ab.

Die Ausnehmung 44 ist nach oben und jeweils seitlich offen.

An der Ausnehmung 44 ist (mindestens) ein elektrischer Anschluss 48 angeordnet. Der elektrische Anschluss ist als Steckeranschluss ausgebildet, so dass ein Stecker einsteckbar ist.

Bei einem Ausführungsbeispiel ist der elektrische Anschluss 48 an der zweiten Begrenzungswand 46b angeordnet. Eine Einsteckrichtung beziehungsweise eine Ausziehrichtung eines Steckers für den elektrischen Anschluss 48 ist vorzugsweise mindestens näherungsweise parallel zu dem ersten Bereich 32 des Deckels 16 beziehungsweise mindestens näherungsweise parallel zu der dritten Begrenzungswand 46c.

In dem Gehäuse 12 ist neben der elektrochemischen Einrichtung 17 eine Schaltungsanordnung 50 auf einer oder mehreren Platinen 52 positioniert. Insbesondere ist die Platine 52 in dem Deckel 16 positioniert.

Von dem elektrischen Anschluss 48 führen Verbindungsleitungen 54 innerhalb des Deckels 16 zu der Schaltungsanordnung 50.

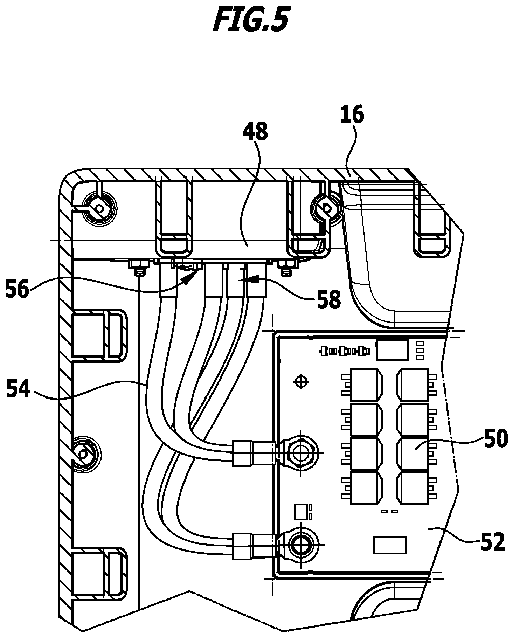

Bei einem Ausführungsbeispiel weisen, wie in Figur 5 gezeigt, alle Verbindungsleitungen 54 zwischen dem elektrischen Anschluss 48 und der Schaltungsanordnung 50 ein einheitlichen Windungssinn auf, um eine optimale Platznutzung zu ermöglichen.

Bei einem Ausführungsbeispiel weist der elektrische Anschluss 48 einen Steuersignalbereich 56 und einen Leistungsbereich 58 auf. Über den Steuersignalbereich 56 lassen sich Steuersignale für die elektrochemische Einrichtung 17 einkoppeln beziehungsweise weiterleiten. Über den Leistungsbereich 58 lässt sich nutzbare elektrische Leistung auskoppeln beziehungsweise im Beispielsfall eines Akkumulators zur Zellaufladung auch einkoppeln.

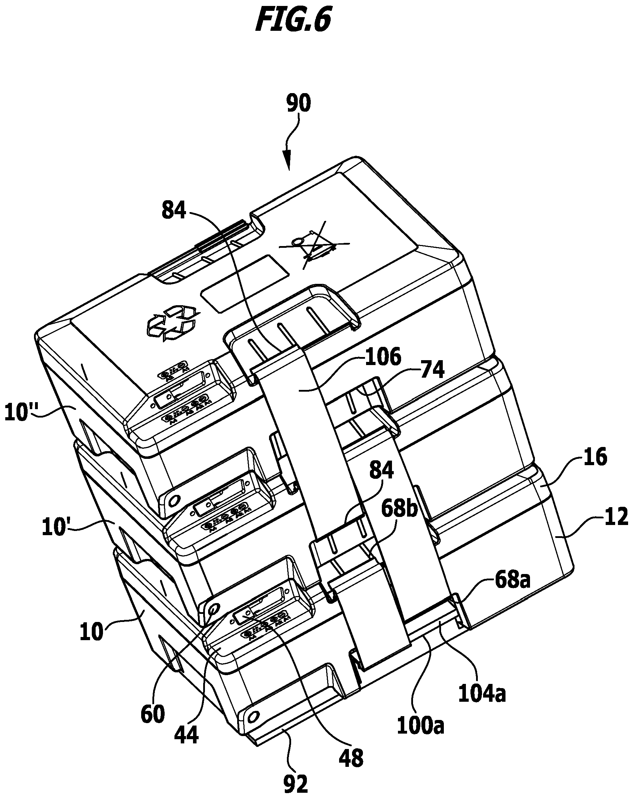

Der Ausnehmung 44 gegenüberliegend ist an dem Behälter 14 eine weitere Ausnehmung 60 gebildet. Diese weitere Ausnehmung 60 ist insbesondere fluchtend zu der Ausnehmung 44 angeordnet. Sie weist beispielsweise eine schräge Begrenzungswand 62 auf. Die weitere Ausnehmung 60 definiert einen Freiraum und die Ausnehmung 44 definiert ebenfalls einen Freiraum. In einem Stapelverbund (vergleiche beispielsweise Figur 6) liegen der Freiraum der Ausnehmung 44 und der Freiraum der weiteren Ausnehmung 60 direkt einander gegenüber und ist ein Summenraum der beiden Freiräume gebildet. Dadurch entsteht in einem Stapelverbund von Batterieeinheiten 10 eine erhöhte Zugänglichkeit für den entsprechenden elektrischen Anschluss 48.

Bei einem Ausführungsbeispiel einer Batterieeinheit 10 sind an dem Behälter 14 an den Querwänden 25a, 24b gegenüberliegend Einbuchtungen 64 (Ausnehmung) gebildet, welche eine Begrenzungswand 66 aufweisen, die quer zu der entsprechenden Querwand 24a, 24b notiert ist. Es ist dadurch eine Greiffläche für einen Benutzer definiert.

Das Gehäuse 12 ist ferner mit einer Mehrzahl von Angriffsbereichen 68 für Verbindungselemente zur Bildung eines Stapelverbunds versehen.

Ein erster Angriffsbereich 68a ist an dem Behälter 14 an der ersten Längswand 22a gebildet. Er umfasst eine Ausnehmung 70, die neben der weiteren Ausnehmung 60 liegt und bezüglich dieser durch eine Trennwand 72 getrennt ist.

An der Ausnehmung 70 ist eine Leiste 74 angeordnet, die zu dem Behälterboden 18 hin ragt. Die Leiste 74 (vergleiche Figur 11) ist durch ein Verbindungselement 76 hintergreifbar.

An dem Deckel 16 ist ein zweiter Angriffsbereich 68b neben der Ausnehmung 44 angeordnet. Dieser zweite Angriffsbereich 68b umfasst eine Ausnehmung 78, welche durch eine Trennwand 80 von der Ausnehmung 44 getrennt ist. An dieser Trennwand 80 ist die erste Begrenzungswand 46a ausgebildet.

An der Ausnehmung 78 ist eine Leiste 82 angeordnet, welche nach oben, in einer Richtung von dem Behälterboden 18 weg ragt (vergleiche hierzu auch Figur 11). Die Leiste 82 ist durch ein Verbindungselement wie das Verbindungselement 76 hintergreifbar.

Die Ausnehmungen 70 und 80 sind so ausgestaltet, dass in ihnen ausreichend Platz zur Aufnahme eines entsprechenden Anlagelements 84 eines Verbindungselements 76 vorliegt.

Die Angriffsbereiche 68a und 68b mit ihren jeweiligen Ausnehmungen 70 und 78 sind insbesondere so aneinander angepasst ausgebildet, dass in einem Stapelverbund sie sich ergänzen und ein zusammenhängender Freiraum (vergleiche Figur 6) gebildet ist.

Die Leisten 74 und 82 sind bei einem Ausführungsbeispiel bündig zu einer entsprechenden Außenseite an der ersten Längswand 22a angeordnet.

Die Angriffsbereiche 68a und 68b liegen in einer Höhenrichtung 86 des Gehäuses 12, welche eine Abstandsrichtung zwischen dem Deckel 16 und dem Behälterboden 18 ist, fluchtend zueinander und weisen insbesondere die gleichen Längsabmessungen in einer Streckung der ersten Längswand 22a auf.

Der zweiten Längswand 22b sind entsprechend gleich ausgebildeten Angriffsbereichen 68 zugeordnet. Der Behälter ist dann zumindest bezüglich der Angriffsbereiche 68 zu einer Mittelebene hin spiegelsymmetrisch ausgebildet.

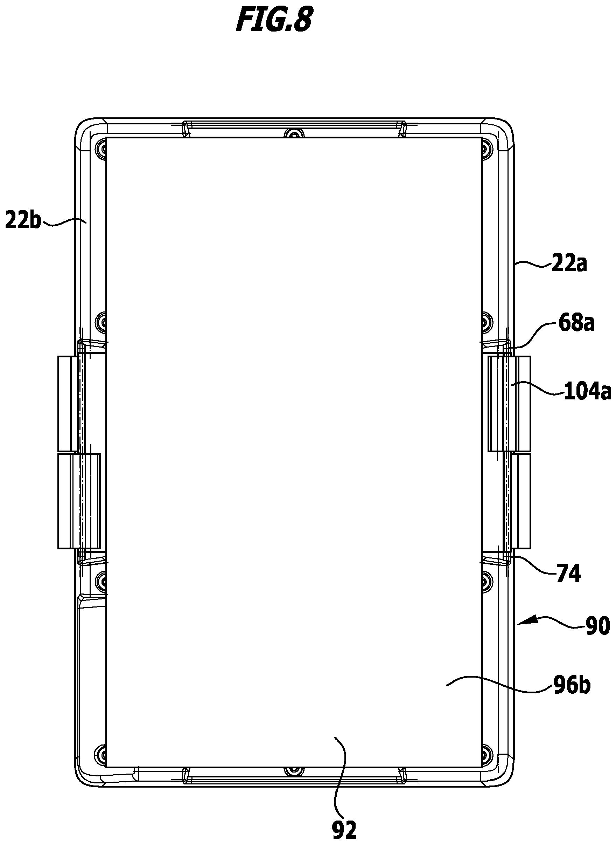

Bei einem ersten Ausführungsbeispiel eines Stapelverbunds, welcher in den Figuren 6 bis 12 gezeigt und dort mit 90 bezeichnet sind, sind eine Mehrzahl von Batterieeinheiten entsprechend der Batterieeinheit 10 (in Figur 11 mit 10, 10' und 10" bezeichnet) gestapelt miteinander verbunden. Bei dem Stapelverbund 90 liegt der Deckel 16 der Batterieeinheit 10 an dem Behälterboden 18 der benachbarten Batterieeinheit 10' an. Der Deckel 16 der Batterieeinheit 10' liegt wiederum an dem Behälterboden 18 der Batterieeinheit 10' benachbarten Batterieeinheit 10" an. Bei der Anlage eines Deckels 16 am Behälterboden 18 der nächstbenachbarten Batterieeinheit ist dabei der erste Bereich 32 des entsprechenden Deckels 16 in die Ausnehmung 40 des entsprechenden Behälterbodens 18 eingetaucht und liegt dort an.

Grundsätzlich ist es so, dass bei dem Stapelverbund 90 die Stapelrichtung nicht eine Gegenrichtung zur Gravitationsrichtung sein muss, sondern im Prinzip beliebig relativ zur Gravitationsrichtung liegen kann.

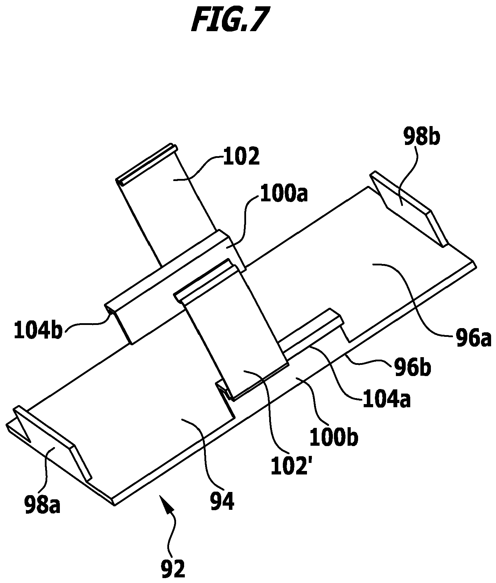

Bei einem Ausführungsbeispiel weist der Stapelverbund 90 eine Endplatte 92 (Figuren 6 und 7) auf. Die Endplatte 92 umfasst eine Platte 94, welche vorzugsweise an ihrer Innenseite 96a und an ihrer der Innenseite gegenüberliegenden Außenseite 96b eben ist. Im Bereich von gegenüberliegenden Enden sind an der Platte 94 Seitenleisten 98a, 98b angeordnet, welche von der Innenseite 96a weg nach oben ragen.

Ferner sind quer dazu Seitenleisten 100a, 100b angeordnet. Eine Batterieeinheit wie die Batterieeinheit 10, welche auf der Platte 94 aufliegt, ist durch die Seitenleisten 98a, 98b, 100a, 100b in seiner Querbeweglichkeit durch entsprechende Anlage an den Seitenleisten 98a beziehungsweise 98b beziehungsweise 100a beziehungsweise 100b gesperrt.

An den Seitenleisten 100a, 100b, die zur Anlage der Längswände 22a, 22b dienen, sind Verbindungselemente 102, 102' fest oder lösbar angeordnet. Bei einem Ausführungsbeispiel sind die Verbindungselemente 102, 102' einstückig mit den entsprechenden Seitenleisten 100a, 100b verbunden. Insbesondere ist dann die Endplatte 92 einstückig ausgebildet und beispielsweise aus einem metallischen Material und vorzugsweise aus einem Kunststoff-Material hergestellt.

Es kann auch vorgesehen sein, dass an den Seitenleisten 100a, 100b jeweilige Leisten 104a, 104b gebildet sind, welche beabstandet zu einem Hauptkörper der Seitenleiste 100a beziehungsweise 100b sind und in Richtung der Platte 94 ragen. Diese Leisten 104a, 104b entsprechen in ihrer Funktionalität den Leisten 74 beziehungsweise 82. Sie dienen zur Anlage eines Anlagelements 84 eines Verbindungselements und entsprechen dem Verbindungselement 76 mit einer Hintergreifbarkeit und einem genügenden Abstand zu dem Hauptkörper, um entsprechend ein Anlagelement 84 positionieren zu können.

Die Seitenleisten 100a, 100b sind insbesondere so ausgebildet, dass die jeweilige Ausnehmung 74 des ersten Angriffsbereichs 68a der positionierten Batterieeinheit eintauchbar ist. Bei dem Stapelverbund 90 sind als Verbindungselemente Klammern 106 vorgesehen, welche bandförmig ausgebildet sind und an beiden Enden mit Anlagelementen 84 versehen sind. Ein Anlagelement 84 ist dabei insbesondere einstückig an der Klammer 106 gebildet durch beispielsweise eine erste Umbiegung 108 und eine zweite Umbiegung 110. Durch die erste Umbiegung 108 lässt ein Hintergreifen an der entsprechenden Leiste 74 beziehungsweise 82 beziehungsweise 104a, 104b erreichen. Durch die zweite Umbiegung wird ein leichtes Herausschnappen verhindert.

Die Klammer 106 ist insbesondere aus einem Kunststoff-Material hergestellt und einstückig. Es ist insbesondere vorgesehen, dass eine Klammer 106 zwischen benachbarten Batterieeinheiten 10, 10' beziehungsweise 10" angreift und für eine Verspannung sorgt. Die Klammer 106 ist dabei so ausgebildet, dass sie bezüglich der Leiste 74 eine Kraftwirkung nach oben (in Figur 11 durch den Pfeil mit dem Bezugszeichen 112 angedeutet), verursacht und an der Leiste 82 der benachbarten Batterieeinheit eine Kraftwirkung in Gegenrichtung nach unten (in Figur 11 durch den Pfeil mit dem Bezugszeichen 114 angedeutet), verursacht.

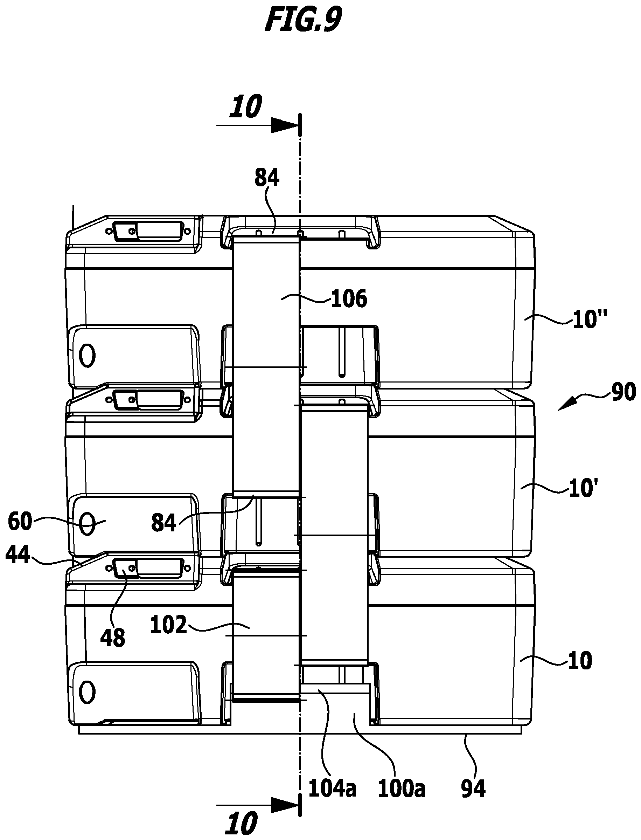

Die Klammer 106 ist in ihrer Breite beispielsweise so ausgebildet, dass an einem Angriffsbereich nebeneinander zwei Klammern 106 angeordnet werden können (vergleiche die Figuren 6 und 9).

Beispielsweise ist die Batterieeinheit 10 über ein Verbindungselement 102, welches eine Klammer wie die entsprechende Klammer 106, jedoch mit kürzeren Abmessung ist, mit der Endplatte 92 verspannt, wobei das Verbindungselement 102 mit sein entsprechenden Anlagelement 84 an der Leiste 72 des zweiten Angriffsbereichs 68 der Batterieeinheit 10 angreift.

Neben diesem Verbindungselement 102 ist eine Klammer 106 angeordnet, welche an der Leiste 74 des ersten Angriffsbereichs 68a der Batterieeinheit 10 angreift und an die Leiste 82 des zweiten Angriffsbereichs 68b am Deckel 16 der Batterieeinheit 10' angreift. Daneben wiederum ist eine weitere Klammer 106 angeordnet, welche insbesondere fluchtend zu dem Verbindungselement 102 ausgerichtet ist, und an der Leiste 74 des Angriffsbereichs 68a der Batterieeinheit 10 angreift und an der Leiste 82 des Angriffsbereichs 68b der Batterieeinheit 10" angreift.

Eine solche Klammeranordnung ist dabei vorzugsweise an mindestens zwei Seiten im Stapelverbund 90 (vergleiche Figur 10), vorgesehen. Es kann dabei beispielsweise vorgesehen sein, dass die entsprechende Klammeranordnung an unterschiedlichen Seiten spiegelbildlich ist, wie in Figur 10 angedeutet. Eine Klammeranordnung 116 an einer Seite ist spiegelbildlich zu einer Klammerordnung 118 an der gegenüberliegenden Seite.

Die Endplatte 92 kann ein Zusatzelement sein, über welches sich der Stapelverbund bilden lässt, wobei sich ein so gebildeter Stapelverbund an einer Anwendung wie einer Bodenreinigungsmaschine fixieren wird. Die Endplatte 92 kann auch Teil einer Anwendung wie einer Bodenreinigungsmaschine sein und an dieser fixiert sein und beispielsweise auch ein funktionelles Element oder Teil eines funktionellen Elements der Anwendung sein. Beispielsweise ist die Endplatte als Teil einer Wandung an der Anwendung ausgebildet und wird zur Fixierung und Bildung eines Stapelverbundes verwendet. Wenn die Endplatte Teil der Anwendung ist, dann lässt sich insbesondere einen Stapelverbund an der Anwendung bilden.

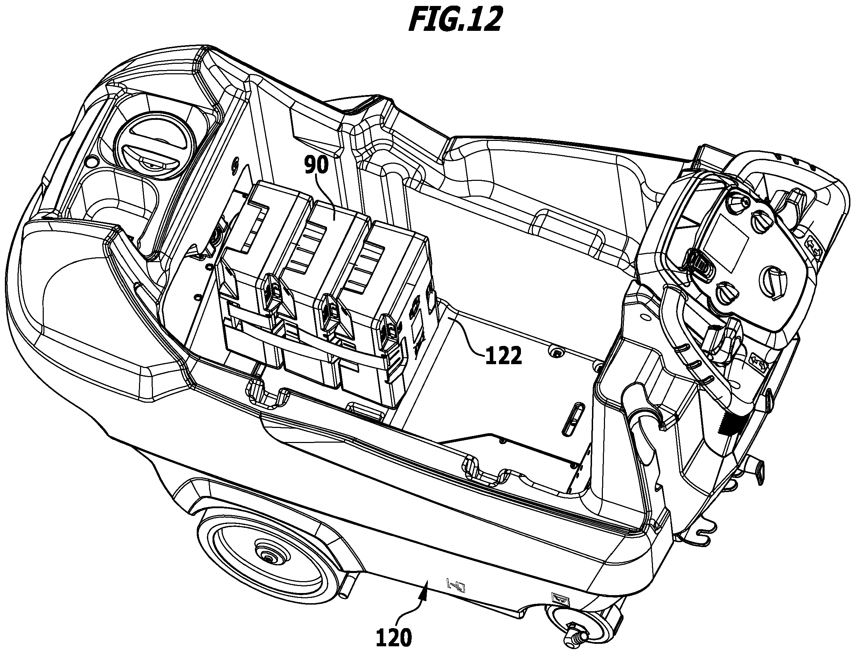

Der entsprechende Stapelverbund 90 ist beispielsweise zur Positionierung an einer Bodenreinigungsmaschine 120 (Figur 12) vorgesehen. In Figur 12 ist eine Teildarstellung einer Aufsitzbodenreinigungsmaschine gezeigt, bei welcher in einem entsprechenden Innenraum 122 der Stapelverbund 90 positioniert ist.

Auch andere Arten von Bodenreinigungsmaschinen 120, wie beispielsweise handgeführte Bodenreinigungsmaschinen sind als Einsatzmöglichkeiten für den Stapelverbund 90 möglich.

Es kann dabei vorgesehen sein, dass die Endplatte 92 einen Teil der Bodenreinigungsmaschine 120 und an dieser fixiert ist. Der Stapelverbund 90 wird dann insbesondere an der Bodenreinigungsmaschine 120 hergestellt, indem entsprechend die unterste Batterieeinheit mit der Endplatte als Teil der Bodenreinigungsmaschine 120 fixiert wird.

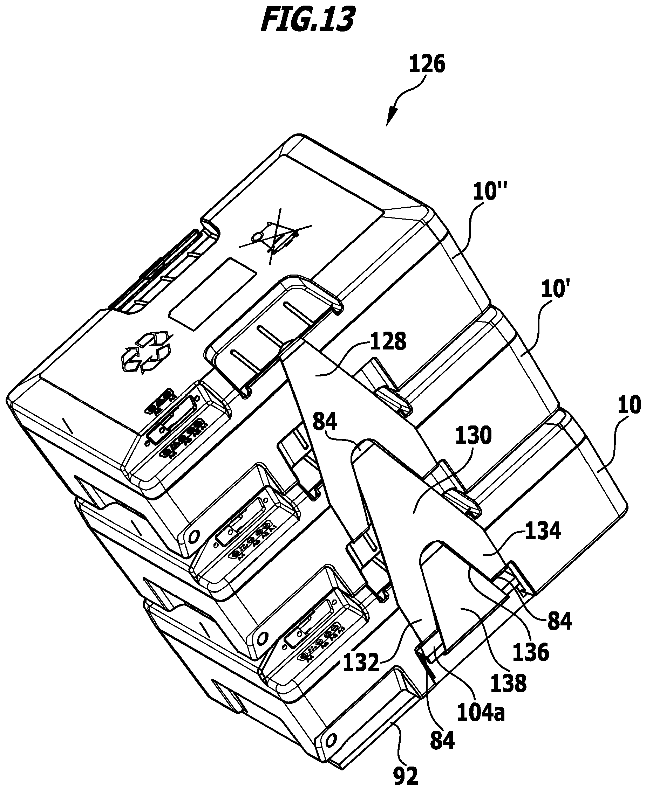

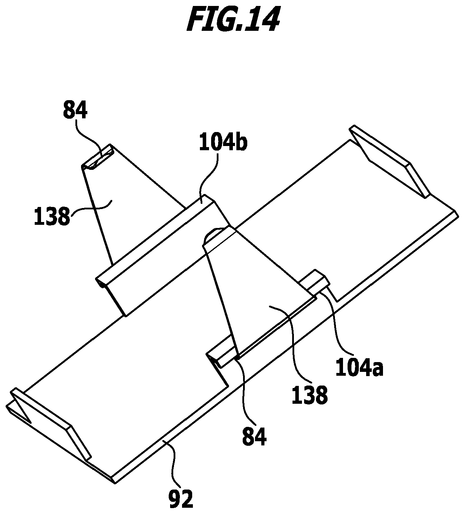

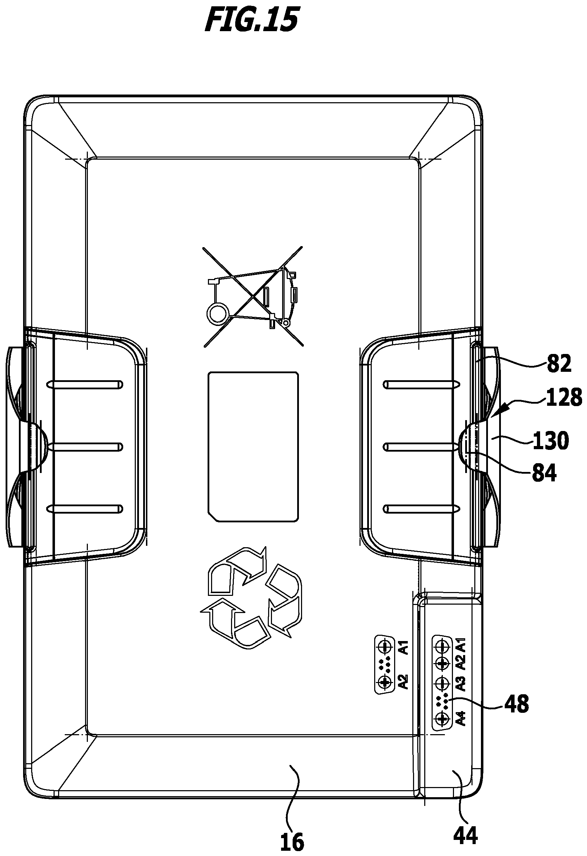

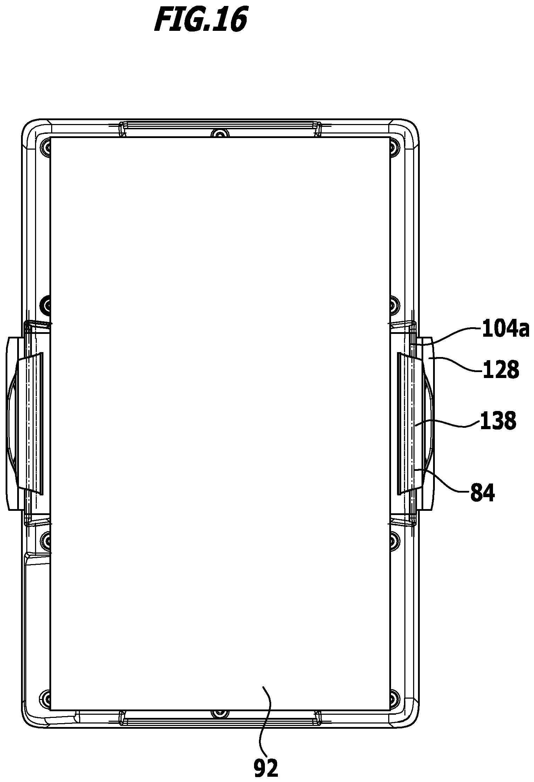

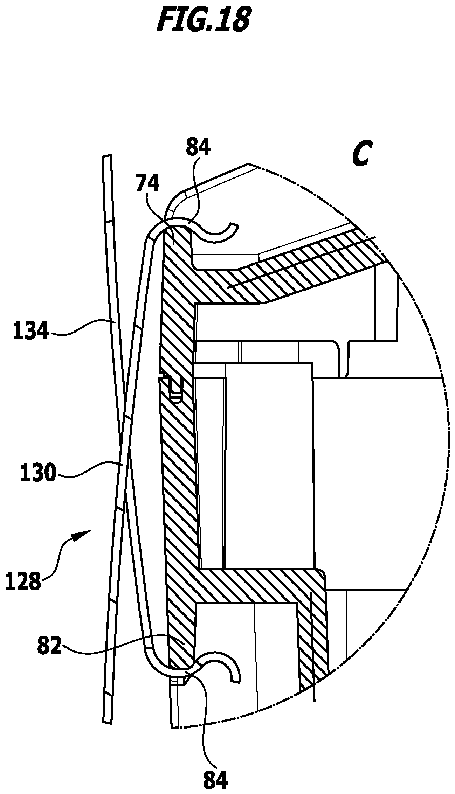

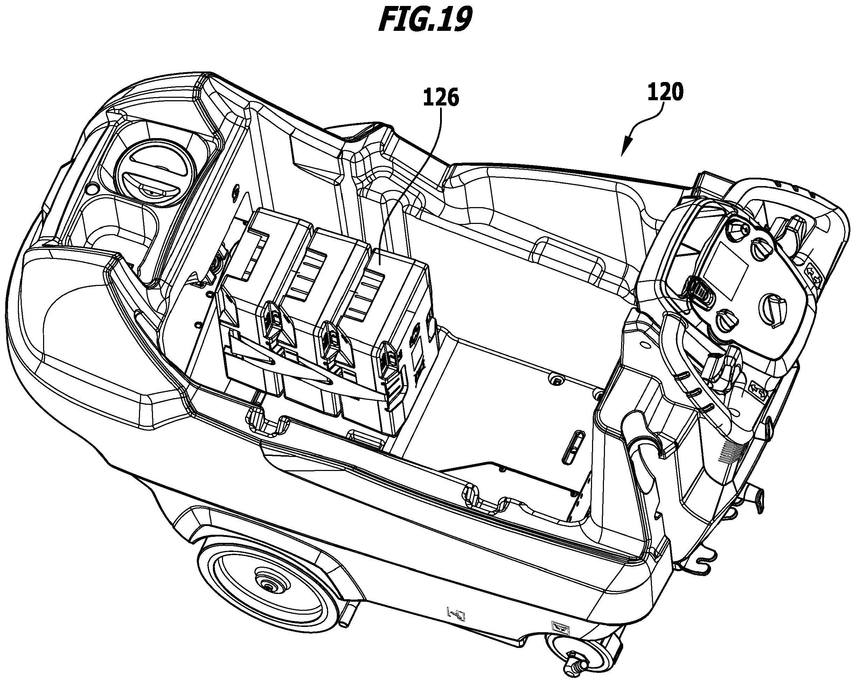

Ein weiteres Ausführungsbeispiel eines Stapelverbunds, wie es in den Figuren 13 bis 19 gezeigt ist und dort mit 126 bezeichnet ist, umfasst wiederum Batterieeinheiten 10, 10', 10", welche wie oben beschrieben gestapelt sind.

Es ist wiederum eine Endplatte 92 wie oben beschrieben vorgesehen. Der Stapelverbund 126 ist durch Klammern 128 als Verbindungselemente zusammengehalten, wobei die Klammern 128 benachbarte Batterieeinheiten 10 miteinander verspannt.

Eine solche Klammer 128 ist Y-förmig und umfasst einen Hals 130, an welchem endseitig ein Anlagelement 84 sitzt. An dem Hals sitzen ein erster Fuß 132 und ein zweiter Fuß 134. Zwischen dem ersten Fuß 132 und dem zweiten Fuß 134 ist ein Zwischenraum 136 gebildet. Der Zwischenraum 136 ist dabei derart ausgebildet, dass der Hals 130 eine Klammer 126 oder 136 einsetzbar ist.

An dem ersten Fuß 132 und am dem zweiten Fuß 134 sitzen jeweils Anlagelemente 84.

Insbesondere ist der Hals 130 der Klammer in Form eines abgeschnittenen Dreiecks ausgebildet.

Die Klammer 138 dient zur Verbindung der Endplatte 92 mit der ersten Batterieeinheit 10. Die Klammer 138 weist nur einen Hals 130 ohne Füße 132, 134 auf, wobei in dem Hals beidendig Anlagelemente 84 angeordnet sind.

Bei dem Stapelverbund 126 liegt die Klammer 138 an der Leiste 104a an. Sie liegt ferner an der Leiste 82 am Deckel 16 der Batterieeinheit 10 an.

Eine Klammer 128 liegt an der Leiste 74 der Batterieeinheit 10 an. Sie liegt ferner an der Leiste 82 der Batterieeinheit 10' an. Die Klammer 138 liegt mit einem großen Bereich zwischen den Füßen 132, 134 im Zwischenraum 136 der erwähnten Klammer 128, welche die Batterieeinheiten 10 und 10' verbindet.

Eine weitere Klammer 128 liegt dann der Leiste 74 der Batterieeinheit 10' mit ihren Anlagelementen 84 an den Füßen 132 und 134 an. Mit dem Anlagelement 84 an dem Hals 130 liegt sie an der Leiste 82 der Batterieeinheit 10" an.

Es erfolgt dadurch eine Verspannung, welche insbesondere auf mindestens zwei und insbesondere zwei gegenüberliegenden Seiten erfolgt.

Die Klammern 128 (und die Klammer 138) überlappen sich sukzessive.

Der Stapelverbund 126 lässt sich wiederum an einer Anwendung positionieren wie beispielsweise der Bodenreinigungsmaschine 120.

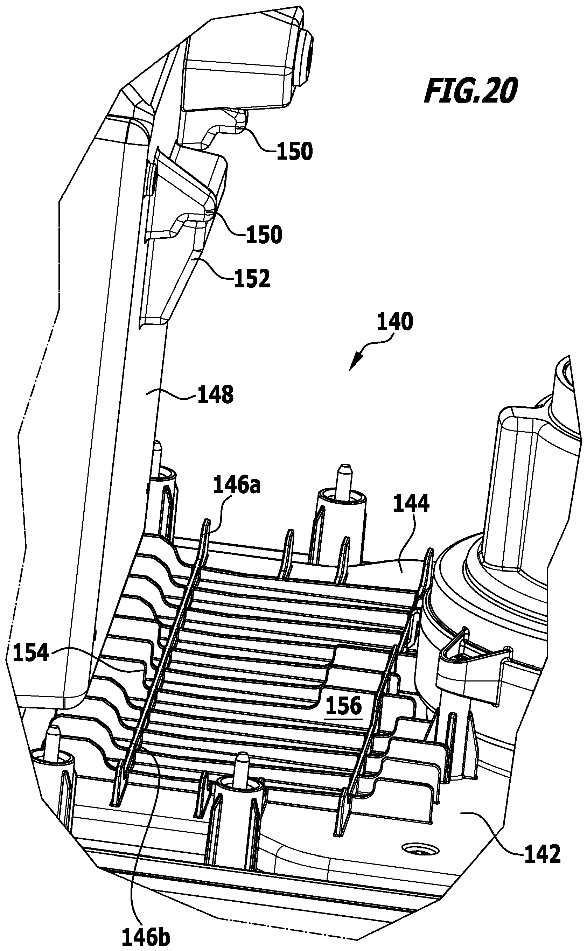

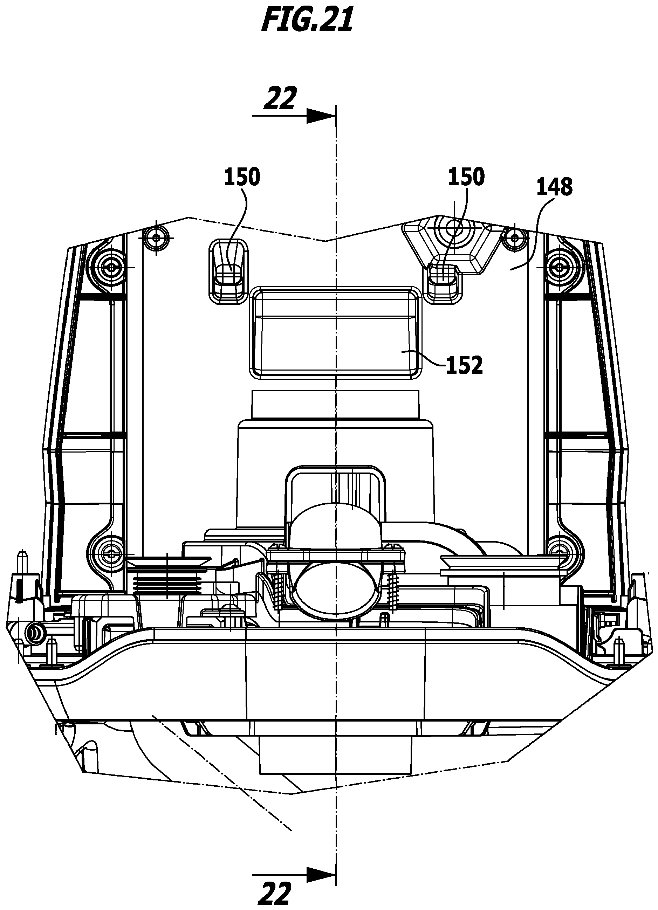

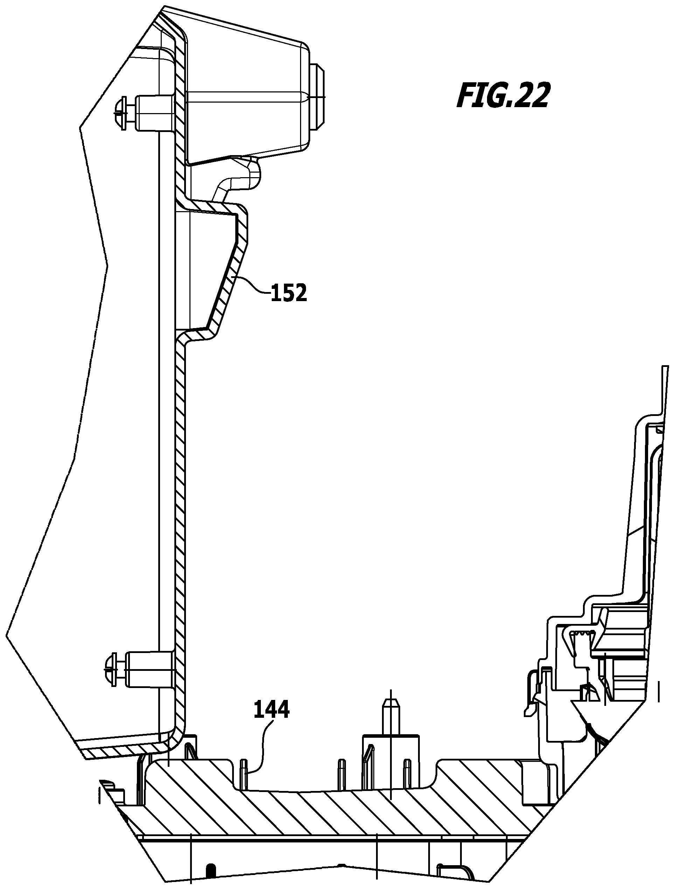

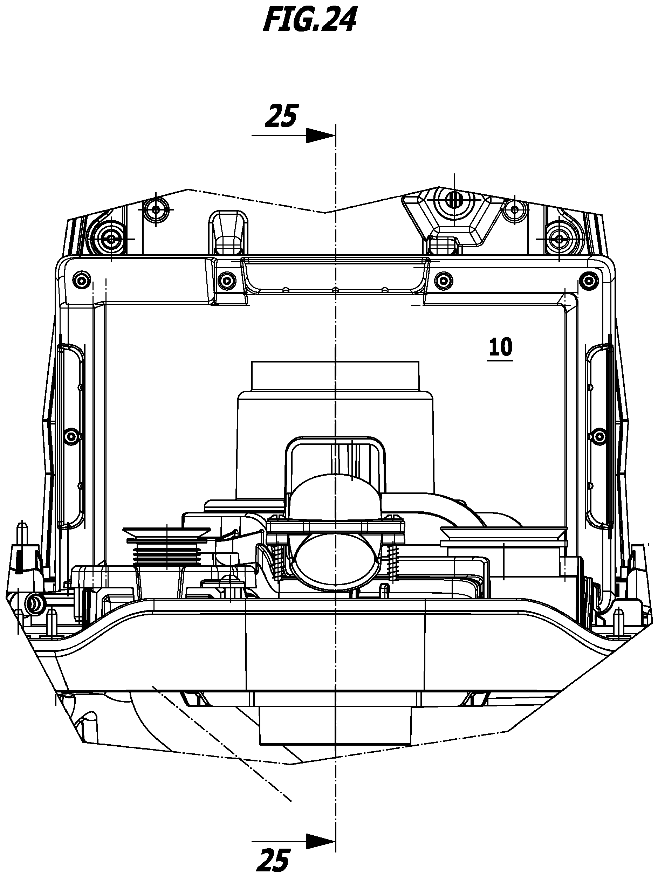

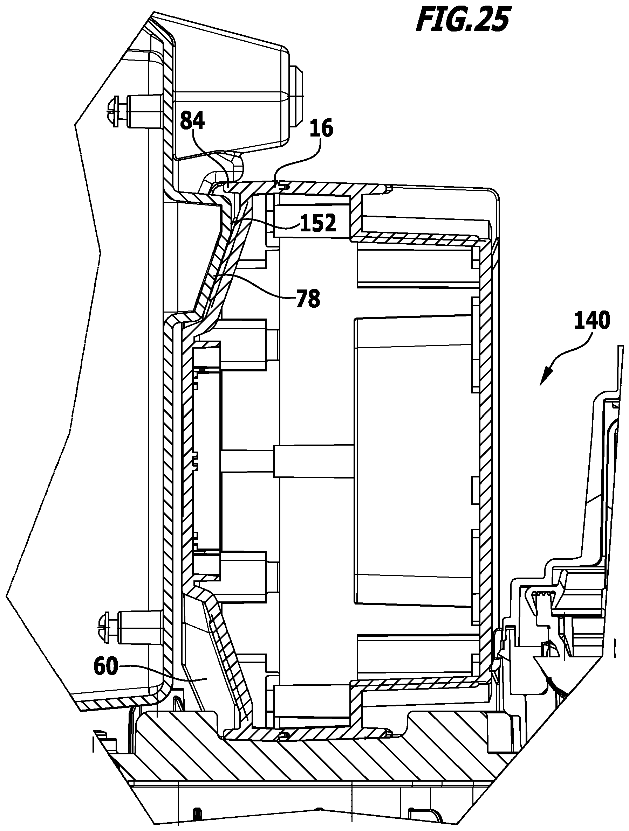

Eine Anwendung wie beispielsweise eine Bodenreinigungsmaschine, weist eine Aufnahmeeinrichtung 140 für die Batterievorrichtung mit einer einzelnen Batterieeinheit 10 beziehungsweise einem Stapelverbund auf. In den Figuren 20 bis 25 ist eine Aufnahmeeinrichtung 140 für eine einzelne Batterieeinheit gezeigt.

Die Aufnahmeeinrichtung 140 ist in einem Innenraum 142 der Anwendung angeordnet. Sie umfasst eine Aufstellfläche 144. An der Aufstellfläche 144 ist eine Batterieeinheit 10 beziehungsweise ein Stapelverbund von Batterieeinheiten 10 aufstellbar. Insbesondere ist vorgesehen, dass eine Batterieeinheit beziehungsweise ein Stapelverbund mit einer Längsseite beziehungsweise Längsseiten wie beispielsweise der durch die erste Längswand 22a gebildeter Längsseite aufstellbar ist.

Es sind dabei Anlagelemente 146a, 146b usw. vorgesehen, welche eine Art von "offener" Aufnahmewanne definieren, in welche die Batterieeinheit 10 beziehungsweise der Stapelverbund so einlegbar sind, dass eine Querbeweglichkeit zu der Einlegerichtung gesperrt ist. Die Anordnung der Anlagelemente 146a, 146b usw. ist dabei derart, dass sie an die Form des Gehäuses 12 angepasst ist.

Beabstandet zu der Aufstellfläche 144 ist an einer Wandung 148 an der Anwendung wie der Bodenreinigungsmaschine 120 mindestens ein weiteres Anlagelement 150 vorgesehen, welches zur Anlage der gegenüberliegenden Längswand 22b (der zweiten Längswand) vorgesehen ist. Es dient zur Sperrung einer Höhenverschieblichkeit. Es kann auch zur Kodierung dienen.

Bei einem Ausführungsbeispiel ist an der Wandung 148 ein Eintauchelement 152 angeordnet, welches zum Eintauchen in die Ausnehmung 78 an dem Deckel 16 der Battereinheit 10 beziehungsweise der ersten Batterieeinheit in einem Stapelverbund vorgesehen ist. Nur wenn das Gehäuse 12 die entsprechende Form hat mit entsprechender Positionierung und Ausbildung der Ausnehmung 78 lässt sich eine Batterieeinheit 10 beziehungsweise ein Stapelverbund richtig positionieren. Das Eintauchelement 152 stellt dadurch eine mechanische Kodierung dar. Nur entsprechend ausgebildete Batterieeinheiten 10 beziehungsweise Stapelverbunde von solchen Batterieeinheiten 10 können an der Anwendung positioniert werden.

Bei einem Ausführungsbeispiel ist die Aufstellfläche 144 so ausgebildet, dass an ihr ein Eintauchelement 154 (Figur 20) angeordnet ist, welches insbesondere ein zu dem Eintauchelement 152 korrespondierendes Element an der Aufstellfläche 144 ist. Dieses Eintauchelement 154 ist vorgesehen zum Eintauchen in eine Ausnehmung 78 auf der gegenüberliegenden Seite des Deckels 16. Sie ist entsprechend an die Ausnehmung 78 angepasst, sodass nur ein entsprechend ausgebildetes Gehäuse 12 korrekt positioniert werden kann.

Ferner ist gegenüberliegend dem Eintauchelement 154 an der Aufstellfläche 144 ein weiteres Eintauchelement 156 angeordnet. Dieses dient zum Eintauchen in eine entsprechende Ausnehmung 70 an dem Gehäuse 12. Wenn eine Batterieeinheit 10 über seine Querseite 22b auf der Aufstellfläche 144 aufgestellt ist, dann ist eine korrekte Positionierung nur möglich, wenn das Eintauchelement 154 in eine Ausnehmung 78 und das Eintauchelement 56 in eine Ausnehmung 70 nächstliegend zu dieser Querseite 22b eintaucht. Ferner ist eine korrekte Positionierung nur dann erreichbar, wenn das Eintauchelement 152 in eine Ausnehmung 78 an der Querseite 22a eintaucht.

Ferner ist eine korrekte Positionierung nur möglich, wenn die Anlagelemente 146a und 146b entsprechend anliegen. Es ist dadurch sichergestellt, dass nur die richtigen Batterievorrichtungen für die entsprechende Maschine und insbesondere Bodenreinigungsmaschine an dieser positioniert werden können.

Dadurch wird insbesondere eine Beschädigung der Anwendung durch Verwendung eines falschen Batteriesatzes vermieden.

Weiterhin wird durch das Eintauchelement 152 dafür gesorgt, dass die Batterieeinheit 10 beziehungsweise der Stapelverbund nur so positioniert werden kann, dass der elektrische Anschluss 48 oben liegt und damit leicht zugänglich ist.

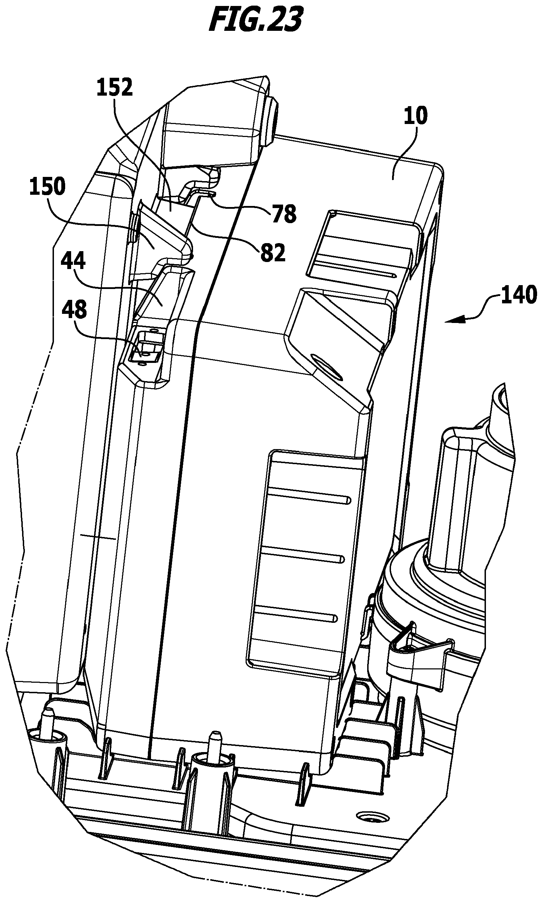

In den Figuren 23 bis 25 ist die Aufnahmeeinrichtung 140 mit fixierter Batterieeinheit 10 gezeigt. Das Eintauchelement 152 taucht in die Ausnehmung 78 ein. Die Leiste 82 hat dann auch die zusätzliche Funktion einen Eintauchbereich zu definieren und eine Sperrwand zu definieren.

### Bezugszeichenliste

- 10: Batterieeinheit
- 10': Batterieeinheit
- 10": Batterieeinheit
- 12: Gehäuse
- 14: Behälter
- 16: Deckel
- 17: elektrochemische Einrichtung
- 18: Behälterboden
- 19: Akkumulatorzellen
- 20: Wände
- 22a: erste Längswand
- 22b: zweite Längswand
- 24a: erste Querwand
- 24b: zweite Querwand
- 26: Nut
- 28: Wandung
- 30: Eintauchleiste
- 32: erster Bereich
- 34: zweiter Bereich
- 36: Winkel
- 38: Eckbereich
- 40: Ausnehmung
- 42: Wandung
- 44: Ausnehmung
- 46a: erste Begrenzungswand
- 46b: zweite Begrenzungswand
- 46c: dritte Begrenzungswand
- 48: elektrischer Anschluss
- 50: Schaltungsanordnung
- 52: Platine
- 54: Verbindungsleitung
- 56: Steuersignalanschlussbereich
- 58: Leistungsanschlussbereich
- 60: weitere Ausnehmung
- 62: Begrenzungswand
- 64: Ausnehmung
- 66: Begrenzungswand
- 68: Angriffsbereich
- 68a: erster Angriffsbereich
- 68b: zweiter Angriffsbereich
- 70: Ausnehmung
- 72: Trennwand
- 74: Leiste
- 76: Verbindungselement
- 78: Ausnehmung
- 80: Trennwand
- 82: Leiste
- 84: Anlagelement
- 86: Gehäuse
- 90: Stapelverbund
- 92: Endplatte
- 94: Platte
- 96a: Innenseite
- 96b: Außenseite
- 98a: Seitenleiste
- 98b: Seitenleiste
- 100a: Seitenleiste
- 100b: Seitenleiste
- 102: Verbindungselement
- 102': Verbindungselement
- 104a: Seite
- 104b: Seite
- 106: Klammer
- 108: erste Umbiegung
- 110: zweite Umbiegung
- 112: Kraftwirkung
- 114: Kraftwirkung
- 116: Klammeranordnung
- 118: Klammeranordnung
- 120: Bodenreinigungsmaschine
- 122: Innenraum
- 126: Stapelverbund
- 128: Klammer
- 130: Hals
- 132: erster Fuß
- 134: zweiter Fuß
- 136: Zwischenraum
- 138: Klammer
- 140: Aufnahmeeinrichtung
- 142: Innenraum
- 144: Aufstellfläche
- 146a: Anlagelement
- 146b: Anlagelement
- 148: Wandung
- 150: Anlagelement
- 152: Eintauchelement
- 154: Eintauchelement
- 156: Eintauchelement

## Patentansprüche

1. Batterievorrichtung, umfassend mindestens eine Batterieeinheit (10; 10'; 10") mit einem Gehäuse (12), welches eine elektrochemische Einrichtung (17) aufnimmt, wobei das Gehäuse (12) einen Behälter (14) und einen Deckel (16) für den Behälter (14) aufweist und an dem Gehäuse (12) eine Ausnehmung (44) angeordnet ist, deren Begrenzungswände (46a; 46b; 46c) gegenüber Außenseiten von Wänden (22; 24a; 32) des Gehäuses (12) außerhalb der Ausnehmung zurückgesetzt sind und wobei an der Ausnehmung (44) mindestens ein elektrischer Anschluss (48) angeordnet ist, wobei der Deckel (16) einen ersten Bereich (32) aufweist, welcher im Wesentlichen eben ist und welcher von einem abgeschrägten Bereich (34) umgeben ist, **dadurch gekennzeichnet, dass** an einem Boden (18) des Behälters (14) an einer Außenseite eine von einer Wandung (42) umgebende Ausnehmung (40) angeordnet ist, welche an die Form des Deckels (16) angepasst ist, wobei die Ausnehmung (40) als Zentrierungsausnehmung für einen Stapelverbund (90; 126) mit einer Mehrzahl von Batterieeinheiten (10; 10'; 10") ausgebildet ist, wobei Batterieeinheiten (10; 10'; 10") im Stapelverbund (90; 126) elektrisch miteinander verbunden sind.

2. Batterievorrichtung nach Anspruch 1, **dadurch gekennzeichnet, dass** die Ausnehmung (44) an einem Eckbereich (38) des Gehäuses (12) angeordnet ist.

3. Batterievorrichtung nach Anspruch 1 oder 2, **dadurch gekennzeichnet, dass** die Ausnehmung (44) in einer ersten Richtung, in einer zweiten Richtung und in einer dritten Richtung offen ist, wobei die erste Richtung, die zweite Richtung und die dritte Richtung linear unabhängige Richtungen sind und insbesondere jeweils senkrecht zueinander orientiert sind.

4. Batterievorrichtung nach einem der vorangehenden Ansprüche, **dadurch gekennzeichnet, dass** die Ausnehmung (44) eine erste Begrenzungswand (46a), eine zweite Begrenzungswand (46b) und eine dritte Begrenzungswand (46c) aufweist, welche jeweils zueinander quer und insbesondere senkrecht orientiert sind, und insbesondere dass die erste Begrenzungswand (46a) und/oder die zweite Begrenzungswand (46b) und/oder die dritte Begrenzungswand (46c) parallel zu mindestens einem Teilbereich einer entsprechenden Außenseite des Gehäuses (12) orientiert sind, und insbesondere dass der mindestens eine elektrische Anschluss (48) an einer Begrenzungswand (46b) angeordnet ist, welche quer zu einer Deckeloberfläche (32) orientiert ist.

5. Batterievorrichtung nach einem der vorangehenden Ansprüche, **dadurch gekennzeichnet, dass** die Ausnehmung (44) als Einbuchtung am Gehäuse (12) ausgebildet ist.

6. Batterievorrichtung nach einem der vorangehenden Ansprüche, **dadurch gekennzeichnet, dass** die Ausnehmung (44) an dem Deckel (12) angeordnet ist.

7. Batterievorrichtung nach einem der vorangehenden Ansprüche, **dadurch gekennzeichnet, dass** der mindestens eine elektrische Anschluss (48) ein Steckeranschluss ist.

8. Batterievorrichtung nach einem der vorangehenden Ansprüche, **dadurch gekennzeichnet, dass** der mindestens eine elektrische Anschluss (48) einen Steuersignalanschlussbereich (56) und Leistungsanschlussbereich (58) aufweist.

9. Batterievorrichtung nach einem der vorangehenden Ansprüche, **dadurch gekennzeichnet, dass** der mindestens eine elektrische Anschluss (48) mit mindestens einer im Gehäuse (12) angeordneten Platine (52) elektrisch verbunden ist und insbesondere dass Verbindungsleitungen (54) den gleichen Windungssinn aufweisen.

10. Batterievorrichtung nach einem der vorangehenden Ansprüche, **dadurch gekennzeichnet, dass** der abgeschrägte Bereich (34) in einem Winkel (36) im Bereich zwischen 15° und 35° zu dem ersten Bereich (32) liegt.

11. Batterievorrichtung nach einem der vorangehenden Ansprüche, **dadurch gekennzeichnet, dass** an dem Gehäuse (12) der Ausnehmung (44) mit dem mindestens einen elektrischen Anschluss (48) gegenüberliegend eine weitere Ausnehmung (60) angeordnet ist, und insbesondere dass die weitere Ausnehmung (60) so ausgebildet ist, dass, wenn eine erste Batterieeinheit (10) mit einer zweiten Batterieeinheit (10') verbunden ist, sich ein Freiraum, welcher durch die Ausnehmung (44) mit dem mindestens einen elektrischen Anschluss (48) an der ersten Batterieeinheit (10) gebildet ist, sich in einem Freiraum fortsetzt, welcher durch die weitere Ausnehmung (60) an der zweiten Batterieeinheit (10; 10') gebildet ist.

12. Batterievorrichtung nach einem der vorangehenden Ansprüche, **gekennzeichnet durch** mindestens einem an dem Gehäuse angeordneten Angriffsbereich (68a; 68b) für ein oder mehrere Verbindungselemente (76) zur Verbindung mehrerer Batterieeinheiten (10; 10') miteinander, und insbesondere dass ein Angriffsbereich (68a; 68b) eine Leiste (78; 82) umfasst, an welcher ein Anlagelement (84) eines Verbindungselements (76) anlegbar ist und welche insbesondere hintergreifbar ist, und insbesondere dass die mindestens eine Leiste (74; 82) an einer Ausnehmung (70; 78) am Gehäuse (12) angeordnet ist, und insbesondere dass an dem Gehäuse (12) Angriffsbereiche (68a; 68b) mit entgegengesetzten Kraftwirkungsrichtungen (112; 114) für Verbindungselemente (76) angeordnet sind, und insbesondere dass an dem Deckel (16) und/oder dem Behälter (14) mindestens ein Angriffsbereich (68a; 68b) angeordnet ist, und insbesondere dass an dem Deckel (16) und/oder dem Behälter (14) auf gegenüberliegenden Seiten Angriffsbereiche (68) angeordnet sind, und insbesondere dass Angriffsbereiche (68a; 68b) fluchtend aufeinander ausgerichtet sind, und insbesondere dass das mindestens eine Verbindungselement (76) eine Klammer (106; 108) ist mit gegenüberliegenden Anlagelementen (84), **durch** welche mehrere Batterieeinheiten (10; 10'; 10") miteinander verspannbar sind, und insbesondere dass das mindestens eine Verbindungselement (106) bandförmig ausgebildet ist, und insbesondere dass das mindestens eine Verbindungselement (128) einen ersten Fuß (132), einen zweiten Fuß (134) und einen Hals (130) aufweist, wobei der erste Fuß (132) und der zweite Fuß (134) am Hals (130) sitzen und zwischen dem ersten Fuß (132) und dem zweiten Fuß (134) ein Zwischenraum (136) liegt, welcher insbesondere so ausgebildet ist, dass in diesem mindestens teilweise ein Hals (130) eines weiteren Verbindungselements (128) positionierbar ist, und insbesondere dass an dem ersten Fuß (132), dem zweitem Fuß (134) und dem Hals (130) jeweils Anlagelemente (84) angeordnet sind, und insbesondere dass ein Angriffsbereich (68b) neben der Ausnehmung (44) mit dem mindestens einen elektrischen Anschluss (48) angeordnet ist.

13. Batterievorrichtung nach einem der vorangehenden Ansprüche, **gekennzeichnet durch** eine Endplatte (92) zur Anlage an eine Batterieeinheit (10), welche mindestens einen Angriffsbereich für ein Verbindungselement (102) umfasst und/oder an welchem mindestens ein Verbindungselement (102) angeordnet ist, und insbesondere dass die Endplatte (92) mindestens eine Seitenleiste (98a; 98b; 100a; 100b) zur Anlage des Gehäuses (12) einer Batterieeinheit (10) aufweist.

14. Batterievorrichtung nach einem der vorangehenden Ansprüche, **gekennzeichnet durch** einen Stapelverbund (90; 126) einer Mehrzahl von Batterieeinheiten (10; 10'; 10"), und insbesondere dass im Stapelverbund (90; 126) ein Deckel einer Batterieeinheit (10) an einem Boden (18) des Behälters (14) der benachbarten Batterieeinheit (10') angelegt ist, und insbesondere dass im Stapelverbund (90) Verbindungselemente (106) mindestens in einem Teilbereich nebeneinander liegen, und insbesondere dass im Stapelverbund (126) Verbindungselemente (128) mindestens in einem Teilbereich einander überlappen.

15. Maschine, insbesondere Bodenreinigungsmaschine, welche eine Aufnahmeeinrichtung (140) für die Batterievorrichtung gemäß einem der vorangehenden Ansprüche umfasst, an welcher die Batterievorrichtung positioniert ist.

16. Maschine nach Anspruch 15, **dadurch gekennzeichnet, dass** die Aufnahmeeinrichtung (140) mindestens ein Element (152; 154; 156) umfasst, welches in eine Ausnehmung (78; 70) einer Batterieeinheit (10) eintauchbar ist und an diese Ausnehmung (78; 70) angepasst ist, um insbesondere eine Kodierung bereitzustellen, und insbesondere **gekennzeichnet durch** ein Eintauchelement (152) für eine Ausnehmung an einem Deckel (16) einer Batterieeinheit (10), wobei insbesondere die Ausnehmung an einem Angriffsbereich (68) zur Bildung eines Stapelverbunds (90; 126) angeordnet ist.

17. Maschine nach Anspruch 15 oder 16, **dadurch gekennzeichnet, dass** die Aufnahmeeinrichtung (140) mindestens ein Anlagelement (144; 146a; 146b; 150; 152; 154; 156) zur Sperrung einer Beweglichkeit der Batterievorrichtung an der Aufnahmeeinrichtung (140) und/oder zur Bildung einer Kodierung aufweist und/oder dass die Aufnahmeeinrichtung (140) eine Endplatte (92) umfasst.

## Claims

1. Battery device, comprising at least one battery unit (10; 10'; 10") having a housing (12) that receives an electrochemical device (17), wherein the housing (12) comprises a container (14) and a cover (16) for the container (14) and the housing (12) has arranged thereon a recess (44), the boundary walls (46a; 46b; 46c) of which are set back from the exterior sides of walls (22; 24a; 32) of the housing (12) outside the recess and wherein at least one electrical connection (48) is arranged at the recess (44), wherein the cover (16) comprises a first region (32) which is substantially planar and is surrounded by a sloping region (34), **characterized in that** arranged on a bottom (18) of the container (14), on an exterior side thereof, is a recess (40) surrounded by a wall (42), said recess (40) being adapted to the shape of the cover (16), wherein the recess (40) is configured as a centring recess for a stack assembly (90; 126) including a plurality of battery units (10; 10'; 10"), wherein the battery units (10; 10'; 10") in the stack assembly (90; 126) are electrically interconnected.

2. Battery device in accordance with claim 1, **characterized in that** the recess (44) is arranged at a corner region (38) of the housing (12).

3. Battery device in accordance with claim 1 or 2, **characterized in that** the recess (44) is open in a first direction, a second direction and a third direction, wherein the first direction, the second direction and the third direction are linearly independent directions and are in particular oriented perpendicularly to one another in each case.

4. Battery device in accordance with any one of the preceding claims, **characterized in that** the recess (44) has a first boundary wall (46a), a second boundary wall (46b) and a third boundary wall (46c) which are in each case oriented transversely and in particular perpendicularly relative to one another, and in particular **in that** the first boundary wall (46a) and/or the second boundary wall (46b) and/or the third boundary wall (46c) are oriented parallel to at least one portion of a corresponding exterior side of the housing (12), and in particular **in that** the at least one electrical connection (48) is arranged on a boundary wall (46b) that is oriented transversely with respect to a cover surface (32).

5. Battery device in accordance with any one of the preceding claims, **characterized in that** the recess (44) is formed as an indentation on the housing (12).

6. Battery device in accordance with any one of the preceding claims, **characterized in that** the recess (44) is arranged on the cover (12).

7. Battery device in accordance with any one of the preceding claims, **characterized in that** the at least one electrical connection (48) is a plug connection.

8. Battery device in accordance with any one of the preceding claims, **characterized in that** the at least one electrical connection (48) comprises a control signal connection region (56) and a power connection region (58)

9. Battery device in accordance with any one of the preceding claims, **characterized in that** the at least one electrical connection (48) is electrically connected to at least one circuit board (52) arranged in the housing (12), and in particular **in that** connection lines (54) have the same direction of winding.

10. Battery device in accordance with any one of the preceding claims, **characterized in that** the sloping region (34) is at an angle (36) in the range between 15° and 35° relative to the first region (32).

11. Battery device in accordance with any one of the preceding claims, **characterized in that** arranged on the housing (12), in opposite relation to the recess having the at least one electrical connection (48), is a further recess (60), and in particular **in that** the further recess (60) is configured such that, when a first battery unit (10) is connected to a second battery unit (10'), a free space which is formed by the recess (44) having the at least one electrical connection (48) on the first battery unit (10) continues into a free space that is formed by the further recess (60) on the second battery unit (10; 10').

12. Battery device in accordance with any one of the preceding claims, **characterized by** at least one engagement region (68a; 68b) for one or more connecting elements (76) arranged on the housing for connecting together a plurality of battery units (10; 10'), and **characterized in** particular **in that** an engagement region (68a; 68b) comprises a bar (78; 82) which is capable of having a contact element (84) of a connecting element (76) placed in contact thereagainst and which is in particular engageable from behind, and in particular **in that** the at least one bar (74; 82) is arranged at a recess (70; 78) on the housing (12), and in particular **in that** engagement regions (68a; 68b) for engagement of connecting elements (76) with opposing directions of force action (112; 114) are arranged on the housing (12), and in particular **in that** at least one engagement region (68a; 68b) is arranged on the cover (16) and/or on the container (14), and in particular **in that** engagement regions (68) are arranged on the cover (16) and/or on the container (14) on opposite sides thereof, and in particular **in that** engagement regions (68a; 68b) are aligned in line with one another, and in particular **in that** the at least one connecting element (76) is a clamp (106; 108) having opposed contact elements (84) by way of which a plurality of battery units (10; 10'; 10") are clampable together, and in particular **in that** the at least one connecting element (106) is of strip-like configuration, and in particular **in that** the at least one connecting element (128) has a first leg (132), a second leg (134) and a neck (130), wherein the first leg (132) and the second leg (134) are located at the neck (130) and an interspace (136) is located between the first leg (132) and the second leg (134), said interspace (136) being in particular configured such that a neck (130) of a further connecting element (128) is at least partially positionable therein, and in particular **in that** the first leg (132), the second leg (134) and the neck (130) in each case have contact elements (84) arranged thereon, and in particular **in that** an engagement region (68b) is arranged beside the recess (44) having the at least one electrical connection (48).

13. Battery device in accordance with any one of the preceding claims, **characterized by** an end plate (92) for contact against a battery unit (10), which end plate (92) comprises at least one engagement region for a connecting element (102) and/or which has at least one connecting element (102) arranged thereon, and **characterized in** particular **in that** the end plate (92) has at least one side bar (98a; 98b; 100a; 100b) for placing in contact thereagainst the housing (12) of a battery unit (10).

14. Battery device in accordance with any one of the preceding claims, **characterized by** a stack assembly (90; 126) of a plurality of battery units (10; 10'; 10"), and **characterized in** particular **in that** in the stack assembly (90; 126), a cover of a battery unit (10) is in contact against a bottom (18) of the container (14) of the adjacent battery unit (10'), and in particular **in that** in the stack assembly (90), connecting elements (106) lie side by side in at least a portion thereof, and in particular **in that** in the stack assembly (126), connecting elements (128) overlap one another in at least a portion thereof.

15. Machine, in particular surface cleaning machine, comprising a receiving device (140) for the battery device in accordance with any one of the preceding claims, which receiving device (140) has the battery device positioned thereon.

16. Machine in accordance with claim 15, **characterized in that** the receiving device (140) comprises at least one element (152; 154; 156) which is capable of entering a recess (78; 70) of a battery unit (10) and is adapted to said recess (78; 70), in particular in order to provide an encoding, and **characterized in** particular by an entry element (152) for a recess on a cover (16) of a battery unit (10), in particular wherein the recess is arranged at an engagement region (68) for forming a stack assembly (90; 126).

17. Machine in accordance with claim 15 or 16, **characterized in that** the receiving device (140) comprises at least one contact element (144; 146a; 146b; 150; 152; 154; 156) for blocking a movability of the battery device on the receiving device (140) and/or for forming an encoding, and/or **in that** the receiving device (140) comprises an end plate (92).

## Revendications

1. Dispositif de batterie, comprenant au moins une unité de batterie (10 ; 10' ; 10") pourvue d'un boîtier (12), lequel loge un système électrochimique (17), le boîtier (12) comprenant un contenant (14) et un couvercle (16) pour le contenant (14) et un évidement (44), dont les parois de délimitation (46a ; 46b ; 46c) sont en retrait par rapport aux faces extérieures des parois (22 ; 24a ; 32) du boîtier (12) à l'extérieur de l'évidement, étant ménagé sur le boîtier (12), et au moins une connexion électrique (48) étant agencée sur l'évidement (44), le couvercle (16) comprenant une première zone (32), laquelle est sensiblement plate et laquelle est entourée par une zone (34) chanfreinée, **caractérisé en ce qu'**un évidement (40) entouré par une paroi (42), lequel est adapté à la forme du couvercle (16), est ménagé sur un fond (18) du contenant (14) sur une face extérieure, l'évidement (40) étant réalisé sous la forme d'un évidement de centrage pour un ensemble d'empilements (90 ; 126) pourvu d'une pluralité d'unités de batterie (10 ; 10' ; 10''), les unités de batterie (10 ; 10' ; 10'') étant reliées les unes aux autres dans l'ensemble d'empilements.

2. Dispositif de batterie selon la revendication 1, **caractérisé en ce que** l'évidement (44) est ménagé sur une zone de coin (38) du boîtier (12).

3. Dispositif de batterie selon la revendication 1 ou 2, **caractérisé en ce que** l'évidement (44) est ouvert dans une première direction, dans une deuxième direction et dans une troisième direction, la première direction, la deuxième direction et la troisième direction étant des directions linéairement indépendantes et étant orientées en particulier respectivement perpendiculairement les unes aux autres.

4. Dispositif de batterie selon l'une quelconque des revendications précédentes, **caractérisé en ce que** l'évidement (44) présente une première paroi de délimitation (46a), une deuxième paroi de délimitation (46b) et une troisième paroi de délimitation (46c), lesquelles sont orientées respectivement transversalement les unes aux autres et en particulier perpendiculairement les unes aux autres, et en particulier **en ce que** la première paroi de délimitation (46a) et/ou la deuxième paroi de délimitation (46b) et/ou la troisième paroi de délimitation (46c) sont orientées parallèlement à au moins une partie d'une face extérieure correspondante du boîtier (12), et en particulier **en ce que** la ou les connexion électrique (48) sont agencées sur une paroi de délimitation (46b), laquelle est orientée transversalement à une surface de couvercle (32).

5. Dispositif de batterie selon l'une quelconque des revendications précédentes, **caractérisé en ce que** l'évidement (44) est réalisé sous la forme d'un renfoncement sur le boîtier (12).

6. Dispositif de batterie selon l'une quelconque des revendications précédentes, **caractérisé en ce que** l'évidement (44) est ménagé sur le couvercle (12).

7. Dispositif de batterie selon l'une quelconque des revendications précédentes, **caractérisé en ce que** la connexion électrique (48) est une borne mâle.

8. Dispositif de batterie selon l'une quelconque des revendications précédentes, **caractérisé en ce que** la ou les connexions électriques (48) comprennent une zone de connexion de signal de commande (56) et une zone de connexion de puissance (58).

9. Dispositif de batterie selon l'une quelconque des revendications précédentes, **caractérisé en ce que** la ou les connexions électriques (48) sont reliées électriquement à au moins une carte de circuits imprimés (52) agencée dans le boîtier (12) et en particulier **en ce que** des lignes de liaison (54) présentent le même sens de spire.

10. Dispositif de batterie selon l'une quelconque des revendications précédentes, **caractérisé en ce que** la zone chanfreinée (34) forme avec la première zone (32) un angle (36) compris entre 15° et 35°.

11. Dispositif de batterie selon l'une quelconque des revendications précédentes, **caractérisé en ce qu'**un autre évidement (60) est ménagé sur le boîtier (12) à l'opposé de l'évidement (44) présentant la ou les connexions électriques (48), et en particulier **en ce que** l'autre évidement (60) est réalisé de telle sorte que, lorsqu'une première unité de batterie (10) est reliée à une deuxième unité de batterie (10'), un espace libre, lequel est formé sur la première unité de batterie (10) par l'évidement (44) présentant la ou les connexions électriques (48), se prolonge dans un espace libre formé sur la deuxième unité de batterie (10, 10') par l'autre évidement (60).

12. Dispositif de batterie selon l'une quelconque des revendications précédentes, **caractérisé par** au moins une zone d'action (68a ; 68b) agencée sur le boîtier pour un ou plusieurs éléments de liaison (76) destinés à relier plusieurs unités de batterie (10 ; 10') les unes aux autres, et en particulier en ce qu'une zone d'action (68a ; 68b) comporte une barre (74 ; 82) contre laquelle un élément d'appui (84) d'un élément de liaison (76) peut être appliqué et laquelle peut en particulier être saisie par l'arrière, et en particulier en ce que la ou les barres (74 ; 82) sont agencées sur un évidement (70 ; 78) sur le boîtier (12), et en particulier en ce que des zones d'action (68a ; 68b) présentant des sens d'action de force (112 ; 114) opposés pour les éléments de liaison (76) sont agencées sur un évidement (70 ; 78) sur le boîtier (12), et en particulier en ce qu'au moins une zone d'action (68a ; 68b) est agencée sur le couvercle (16) et/ou le contenant (14), et en particulier en ce que des zones d'action (68) sont agencées sur des faces opposées sur le couvercle (16) et/ou le contenant (14), et en particulier en ce que des zones d'action (68a ; 68b) sont orientées au même niveau les unes que les autres, et en particulier en ce que l'élément ou les éléments de liaison (76) sont une attache (106 ; 108) pourvue d'éléments d'appui (84) opposés, par l'intermédiaire desquels plusieurs unités de batterie (10 ; 10' ; 10'') sont mises en tension les unes avec les autres, et en particulier en ce que l'élément ou les éléments de liaison (106) sont en forme de bande, et en particulier en ce que l'élément ou les éléments de liaison (128) comprennent un premier pied (132), un deuxième pied (134) et un col (130), le premier pied (132) et le deuxième pied (134) reposant sur le col (130) et un espace intermédiaire (136) étant situé entre le premier pied (132) et le deuxième pied (134), lequel espace intermédiaire est en particulier réalisé de telle sorte qu'un col (130) d'un autre élément de liaison (128) peut être positionné au moins en partie dans celui-ci, et en particulier en ce que respectivement des éléments d'appui (84) sont agencés sur le premier pied (132), le deuxième pied (134) et le col (130), et en particulier en ce qu'une zone d'action (68b) est agencée à côté de l'évidement (44) présentant la ou les connexions électriques (48).

13. Dispositif de batterie selon l'une quelconque des revendications précédentes, **caractérisé par** une plaque d'extrémité (92) destinée à être en appui contre une unité de batterie (10) et laquelle comporte au moins une zone d'action pour un élément de liaison (102) et/ou sur laquelle au moins un élément de liaison (102) est agencé, et en particulier en ce que la plaque d'extrémité (92) comprend au moins une barre latérale (98a ; 98b ; 100a ; 100b) servant d'appui au boîtier (12) d'une unité de batterie (10).

14. Dispositif de batterie selon l'une quelconque des revendications précédentes, **caractérisé par** un ensemble d'empilements (90 ; 126) d'une pluralité d'unités de batterie (10 ; 10' ; 10''), et en particulier en ce qu'un couvercle d'une unité de batterie (10) est appliqué contre un fond (18) du contenant (14) de l'unité de batterie (10') voisine dans l'ensemble d'empilements (90 ; 126), et en particulier en ce que, dans l'ensemble d'empilements (90), des éléments de liaison (106) sont juxtaposés au moins dans une zone partielle, et en particulier en ce que, dans l'ensemble d'empilements (126), des éléments de liaison (128) se chevauchent mutuellement au moins dans une zone partielle.

15. Machine, en particulier machine de nettoyage des sols, laquelle comporte un système de logement (140) pour le dispositif de batterie selon l'une quelconque des revendications précédentes, sur lequel le dispositif de batterie est positionné.

16. Machine selon la revendication 15, **caractérisée en ce que** le système de logement (140) comporte au moins un élément (152 ; 154 ; 156), lequel peut être enfoncé dans un évidement (78 ; 70) d'une unité de batterie (10) et est adapté à cet évidement (78 ; 70), afin de fournir en particulier un codage, et en particulier **caractérisé par** un élément à enfoncer (152) pour un évidement sur un couvercle (16) d'une unité de batterie (10), l'évidement étant en particulier ménagé sur une zone d'action (68) pour la formation d'un ensemble d'empilements (90 ; 126).

17. Machine selon la revendication 15 ou 16, **caractérisée en ce que** le système de logement (140) comporte au moins un élément d'appui (144 ; 146a ; 146b ; 150 ; 152 ; 154 ; 156) destiné à empêcher le dispositif de batterie de se déplacer sur le système de logement (140) et/ou à former un codage et/ou **en ce que** le système de logement (140) comporte une plaque d'extrémité (92).
